# EUROPÄISCHE PATENTSCHRIFT

(11) **EP 3 198 159 B1**
(45) Veröffentlichungstag und Bekanntmachung des Hinweises auf die Patenterteilung: **07.04.2021**
(21) Anmeldenummer: 15763013.8
(22) Anmeldetag: 15.09.2015
(51) Int. Cl.: F16D 3/62, F16D 3/78, B61C 9/44

(54) **FADENVERSTÄRKTE GELENKVORRICHTUNG UND KUPPLUNGSVORRICHTUNG FÜR EINEN FAHRZEUGANTRIEB**
THREAD-REINFORCED JOINT DEVICE AND COUPLING DEVICE FOR A VEHICLE DRIVE
DISPOSITIF D'ARTICULATION À ARMATURE MÉTALLIQUE ET DISPOSITIF D'ACCOUPLEMENT POUR UN MÉCANISME D'ENTRAÎNEMENT DE VÉHICULE

(30) Priorität: 25.09.2014 DE 102014014493
(43) Veröffentlichungstag der Anmeldung: 02.08.2017
(73) Patentinhaber: Süddeutsche Gelenkscheibenfabrik GmbH & Co. KG, 84478 Waldkraiburg (DE); Siemens Mobility GmbH, 81739 München (DE)
(72) Erfinder: HUBER, Armin, 84573 Schoenberg (DE); BRANDL, Marc, 84508 Burgkirchen (DE); LOEW, Johann, 83342 Peterskirchen (DE); LIESSEL, Roland, 84478 Waldkraiburg (DE); ORTHOFER, Wolfgang, 84539 Ampfing (DE); JOOS, Klaus, 90459 Nürnberg (DE); EBERLER, Josef, 92318 Neumarkt in der Oberpfalz (DE)
(74) Vertreter: Thum, Bernhard
(86) Internationale Anmeldenummer: PCT/EP2015/071057
(87) Internationale Veröffentlichungsnummer: WO 2016/046020

(56) Entgegenhaltungen:
- EP-A2- 2 626 580
- WO-A1-2009/149957
- WO-A1-2014/016269
- BE-A- 456 594
- DE-U1-202013 010 525
- DE-U1-202015 003 886
- FR-A1- 2 234 166
- FR-A1- 2 353 751
- US-A- 4 051 784

## Beschreibung

Die vorliegende Erfindung betrifft eine fadenverstärkte Gelenkvorrichtung und eine Kupplungsvorrichtung für einen Fahrzeugantrieb, insbesondere für den Antrieb eines Niederflurfahrzeugs.

Allgemein sind unter Niederflurfahrzeugen Fahrzeuge zu verstehen, die tiefliegende Böden im Innenraum aufweisen. Dies soll vor allem der barrierefreien Nutzung des Innenraums des Niederflurfahrzeugs dienen, d.h. den barrierefreien Zustieg und Ausstieg von Passagieren ermöglichen. Bei Niederflurfahrzeugen liegen die Innenraumflure, d.h. die Innenraumböden, unterhalb der Radoberkante. Im Fall von Schienenfahrzeugen kann die Fußbodenhöhe im Innenraum noch geringer sein und beispielsweise nur geringfügig oberhalb des halben Raddurchmessers liegen. Bei Straßenbahnen kann die Fußbodenhöhe sogar deutlich unterhalb des halben Raddurchmessers liegen.

WO 2009/149957 A1 offenbart eine Gelenkscheibe mit Buchsen. Die Buchsen weisen ein Innengewinde auf, in das eine Befestigungsschraube eingeschraubt werden kann. BE 456 594 offenbart eine Doppelhohlwelle. Eine erste Hohlwelle weist an ihrem rechten Ende ein Ritzel auf. An ihrem linken Ende ist die erste Hohlwelle über eine Lamellenkupplung mit einer zweiten Hohlwelle verbunden. Die zweite Hohlwelle erstreckt sich durch die erste Hohlwelle und ist mit ihrem rechten Ende über eine Lamellenkupplung mit dem Schienenfahrzeugrad gekoppelt.

Aus dem Stand der Technik sind Kupplungsvorrichtungen gemäß dem Dokument DE 196 39 304 A1 oder US4051784A1 bekannt. Dieses Dokument offenbart eine elastische Gelenkkupplung mit einem zwischen zwei Kupplungsflanschen angeordneten Zwischenring, der aus einzelnen am Umfang verteilten, in Gummiblöcke einvulkanisierten Metallelementen besteht. Die Metallelemente sind wechselseitig mit den Kupplungsflanschen verschraubt. Die Metallelemente des Zwischenrings sind in Umfangsrichtung gleichmäßig verteilte Keile, die sich in radialer Richtung über die gesamte Ringbreite erstrecken. Zwischen die Keile sind die Gummiblöcke einvulkanisiert, die im eingebauten Zustand in Umfangsrichtung unter Druckvorspannung stehen.

Diese aus dem Stand der Technik bekannte Gelenkkupplung ist relativ aufwändig zu montieren, da die Gummiblöcke radial vorgespannt werden müssen, um in Umfangsrichtung eine Druckvorspannung der Gummiblöcke einstellen zu können.

Es ist eine Aufgabe der vorliegenden Erfindung, eine fadenverstärkte Gelenkvorrichtung und eine Kupplungsvorrichtung bereitzustellen, die wartungsarm und einfach zu montieren ist, sowie eine akustische Entkopplung der zu verbindenden Aggregate ermöglicht.

Diese Aufgabe wird mit einer fadenverstärkten Gelenkvorrichtung für einen Fahrzeugantrieb mit den Merkmalen des Patentanspruchs 1 gelöst.

Weitere Ausführungsformen der Erfindung sind in den beigefügten abhängigen Ansprüchen angegeben.

Die erfindungsgemäße fadenverstärkte Gelenkvorrichtung für eine Kupplungsvorrichtung eines Fahrzeugantriebs, insbesondere eines Niederflurfahrzeugs, umfasst eine Mehrzahl von Kopplungselementen und wenigstens ein Fadenpaket. Das wenigstens eine Fadenpaket koppelt benachbarte Kopplungselemente kraftübertragend. Eine an wenigstens einem Kopplungselement angeordnete Stützeinrichtung führt das wenigstens eine Fadenpaket axial. Das wenigstens eine Fadenpaket, die Kopplungselemente und die Stützeinrichtung sind in wenigstens einen elastischen Körper zumindest teilweise eingebettet. Die Kopplungselemente sind derart ausgebildet und/oder positionierbar, dass die fadenverstärkte Gelenkvorrichtung an verschiedene Befestigungsschnittstellen einer Kupplungsvorrichtung anpassbar ist.

Mit den fadenverstärkten Gelenkvorrichtungen gemäß der Erfindung kann die Montage vereinfacht werden. Es ist nicht mehr notwendig, wie beim Stand der Technik die Gummiblöcke in Umfangsrichtung unter Druckvorspannung bzw. radial vorgespannt montieren zu müssen. Dies dient zur erheblichen Vereinfachung und Beschleunigung der Montage. Ferner werden durch die fadenverstärkte Gelenkvorrichtung geringere Montagekräfte benötigt. Dies liegt unter anderem darin begründet, dass bei der erfindungsgemäßen fadenverstärkten Gelenkvorrichtung zum Zeitpunkt der Montage anders als beim Stand der Technik keine noch nicht vollständig eingetretene Relaxation der Gummiblöcke berücksichtigt und ausgeglichen werden muss.

Da die erfindungsgemäßen Gelenkvorrichtungen fadenverstärkt sind, weisen sie verglichen mit dem Stand der Technik eine erhöhte Leistungsdichte auf. Die Fadenverstärkung der Gelenkvorrichtungen führt zu einer erhöhten Zugfestigkeit, so dass bei gleicher Festigkeitsauslegung ein erheblich geringerer Bauraum für die fadenverstärkten Gelenkvorrichtung und somit eine Kupplungsvorrichtungen insgesamt benötigt wird.

Die fadenverstärkten Gelenkvorrichtungen gemäß der Erfindung können aufgrund der Ausbildung und/oder der Positionierung ihrer Kopplungselemente an verschiedene Befestigungsschnittstellen einer Kupplungsvorrichtung angepasst werden. Unter Befestigungsschnittstellen können in diesem Zusammenhang vorbestimmte Lochmuster, vorbestimmte Verschraubungsbilder, vorbestimmte Lochkreisdurchmesser für Antrieb und Abtrieb oder vorbestimmte Befestigungsarten und Befestigungsposition verstanden werden.

Das wenigstens eine Fadenpaket kann aus einzelnen laschenförmig gewickelten Fäden oder aus einer Mehrzahl von laschenförmig gewickelten Einzelfäden bestehen. Ein Fadenpaket kann ein angetriebenes und ein abgetriebenes Kopplungselement umschlingen und auf diese Weise Kräfte und auch Drehmomente zwischen diesen beiden Kopplungselementen übertragen. Die Kopplungselemente können beispielsweise Zylinderbuchsen oder ähnliche Elemente sein. Die Kopplungselemente können wiederum beispielsweise über Bolzen, Schrauben oder ähnliche Verbindungselemente mit einem Flansche oder auch direkt mit einem Rad eines Fahrzeugs verbunden werden.

Der wenigstens eine elastische Körper dient neben der Aufnahme von Zugkräften insbesondere auch zur Aufnahme von Druckkräften, die im Betrieb der fadenverstärkten Gelenkvorrichtung bei der Kraft- bzw. Drehmomentübertragung auftreten können. Die Fadenverstärkung durch das wenigstens eine Fadenpaket begrenzt die Dehnungsbelastungen in dem wenigstens einen elastischen Körper. Dadurch werden die Relaxationserscheinungen in dem wenigstens einen elastischen Körper weiter verringert. Der wenigstens eine elastische Körper kann beispielsweise aus einem Elastomer, einem thermoplastischen Elastomer, einem Polymer oder Gummi hergestellt sein.

Gemäß einer Ausführungsform der Erfindung kann das wenigstens eine Kopplungselement ein Gewinde aufweisen. Das Gewinde kann ein Innengewinde sein. Die fadenverstärkte Gelenkvorrichtung kann direkt mit einem Flansch einer Kupplungsvorrichtung oder ähnlichem verschraubt werden, da die Verbindungschrauben direkt und unmittelbar in das wenigstens eine Kopplungselement der fadenverstärkten Gelenkvorrichtung eingeschraubt werden können. Dadurch kann beispielsweise auf eine Kontermutter verzichtet werden, wodurch Bauraum eingespart werden kann. Ferner kann die fadenverstärkte Gelenkvorrichtung mit dem ein Gewinde aufweisenden wenigstens einen Kopplungselement mit vorgefertigten bzw. vorgegebenen Befestigungsflanschen verschraubt werden, ohne dass die Befestigungsschnittstelle an dem Flansch verändert oder angepasst werden muss.

Das wenigstens eine Kopplungselement kann einen Abschnitt mit wenigstens einem vorbestimmten Schraubenkopf aufweisen. Weist das wenigstens eine Kopplungselement ein Gewinde auf, kann es unter gewissen Umständen nötig sein, beim Einschrauben einer Schraube in das Kopplungselement das Kopplungselement gegenzuhalten. Beispielsweise soll verhindert werden, dass während des Verschraubens ein Drehmoment auf die fadenverstärkte Gelenkvorrichtung bzw. auf den wenigstens einen elastischen Körper oder das Fadenpaket übertragen werden. Aus diesem Grund kann an dem wenigstens eine Kopplungselement ein Schraubenkopf zum Gegenhalten vorgesehen sein. Der vorbestimmte Schraubenkopf kann beispielsweise ein Sechskant sein. Es ebenfalls denkbar, einzelne Kopplungselemente miteinander zu verbinden, damit sich diese beim Verschrauben gegenseitig abstützen können. Beispielsweise können die Kopplungselemente über ein Blech oder ähnliches miteinander verbunden werden. Das Blech kann derart ausgebildet sein, dass es ein Mitdrehen der Kopplungselemente beim Verschrauben verhindert.

Das wenigstens eine Kopplungselement kann einen als Bundelement wirkenden Abschnitt aufweisen. Dieser Abschnitt dient zur Sicherung des Fadenpakets an dem Kopplungselement. Der als Bundelement wirkende Abschnitt kann mit einem Bundelement zusammenwirken, das mit dem Kopplungselement nach dem Anbringen des Fadenpakets verbunden wird. Das Bundelement kann an einem axialen Ende des Kopplungselements vorgesehen sein, das dem als Bundelement dienenden Abschnitt entgegengesetzt ist.

Gemäß einer Ausführungsform kann das wenigstens eine Kopplungselement in einer Buchse aufgenommen ist.

Erfindungsgemäß ist eine erste Gruppe von Kopplungselementen auf einem ersten Radius angeordnet. Wenigstens eine zweite Gruppe von Kopplungselementen ist auf einem zweiten Radius angeordnet. Der erste Radius unterscheidet sich dabei von dem zweiten Radius. Die fadenverstärkte Gelenkvorrichtung kann gemäß dieser Ausführungsform an verschiedene Befestigungslochkreise angepasst werden. Es können beispielsweise ein Flansch mit einem ersten Lochkreis und ein Flansch mit einem zweiten Lochkreis mittels der fadenverstärkten Gelenkvorrichtunq miteinander gekoppelt werden. Anders ausgedrückt, kann der erste Radius einem Flansch, z.B. dem Antriebsflansch, und der zweite Radius, z.B. dem Abtriebsflansch, zugeordnet werden. Es ist jedoch auch denkbar, dass sowohl auf dem ersten Radius als auch auf dem zweiten Radius angetriebene und abgetriebene Kopplungselemente vorgesehen sind. Dadurch können beispielsweise zwei radial zueinander versetzte Befestigungskreise und Drehmomentübertragungsketten bereitgestellt werden. Gemäß einer Ausführungsform können die Kopplungselemente der ersten Gruppe und die Kopplungselemente der zweiten Gruppe in Umfangsrichtung der fadenverstärkten Gelenkvorrichtung wechselweise angeordnet sein.

Ferner können die Kopplungselemente der ersten Gruppe und die Kopplungselemente der zweiten Gruppe in radialer Richtung in einer Flucht liegen.

Ein Kopplungselement der ersten Gruppe und ein Kopplungselement der zweiten Gruppe können über wenigstens ein Fadenpaket miteinander verbunden sein. Gemäß einer Weiterbildung der Erfindung können die Kopplungselemente der ersten Gruppe über eine erste Gruppe von Fadenpaketen und die Kopplungselemente der zweiten Gruppe über eine zweite Gruppe von Fadenpaketen miteinander gekoppelt sein. Sowohl die Kopplungselement auf dem ersten Radius als auch die Kopplungselemente auf dem zweiten Radius können wechselweise mit einem angetriebenen Flansch und einem abgetriebenen Flansch verbunden werden.

Gemäß einer Ausführungsform kann die fadenverstärkte Gelenkvorrichtung mehrere elastische Körper umfassen, d.h. die fadenverstärkte Gelenkvorrichtung kann modular oder mehrteilig aufgebaut sein. Die elastischen Körper bzw. die Kupplungselemente können jeweils wenigstens ein Fadenpaket aufweisen. Bei dieser Ausführungsform setzt sich die fadenverstärkte Gelenkvorrichtung aus mehreren separaten elastischen Körper bzw. Kupplungselemente zusammen, die miteinander gekoppelt sein können. Anders ausgedrückt werden mehrere elastische Körper miteinander verbunden, um die fadenverstärkte Gelenkvorrichtung auszubilden und Drehmomente übertragen zu können. Die Fadenverstärkung begrenzt die Dehnungsbelastungen in dem wenigstens einen elastischen Körper. Dadurch werden die Relaxationserscheinungen in dem wenigstens einen elastischen Körper weiter verringert.

Ferner kann die fadenverstärkte Gelenkvorrichtung eine Mehrzahl von laschenförmigen Fadenpaketen aufweisen. Die laschenförmigen Fadenpakete können dabei ringförmig angeordnet und jeweils über wenigstens ein Kopplungselement miteinander verbunden sein. Erfindungsgemäß ist ein Kopplungselement von zwei laschenförmigen Fadenpaketen umschlungen, wobei eines der Fadenpakete jeweils auf Zug und das andere auf Druck belastet wird.

Die voranstehend beschriebene Aufgabe der Erfindung wird auch durch eine Kupplungsvorrichtung mit den im Anspruch 14 angegebenen Merkmalen gelöst.

Die erfindungsgemäße Kupplungsvorrichtung für einen Fahrzeugantrieb, insbesondere für den Antrieb eines Niederflurfahrzeugs, umfasst wenigstens einen ersten Flansch, der mit einem Getriebe koppelbar ist, wenigstens einen zweiten Flansch, der mit dem wenigstens einen ersten Flansch gekoppelt ist, und wenigstens einen dritten Flansch, der mit dem wenigstens einen zweiten Flansch über wenigstens einen Wellenabschnitt verbunden ist, und der mit wenigstens einem anzutreibenden Rad des Fahrzeugs koppelbar ist. Der wenigstens eine Wellenabschnitt erstreckt sich durch den wenigstens einen ersten Flansch hindurch. Der wenigstens eine erste Flansch und der wenigstens eine zweite Flansch sind über wenigstens eine erste fadenverstärkte Gelenkvorrichtung gekoppelt und an dem wenigstens einen dritten Flansch ist wenigstens eine zweite fadenverstärkte Gelenkvorrichtung angeordnet.

Gemäß einer Ausführungsform kann der wenigstens eine Wellenabschnitt ein Hohlwellenabschnitt sein.

Der wenigstens eine erste Flansch kann gemäß einer Ausführungsform eine Öffnung aufweisen. Durch die Öffnung des wenigstens einen ersten Flanschs kann sich der wenigstens eine Wellenabschnitt hindurch erstrecken.

Der wenigstens eine Wellenabschnitt kann eine Verzahnung aufweisen, die in eine korrespondierende Verzahnung an dem wenigstens einen zweiten Flansch eingreift. Über die Verzahnung zwischen dem wenigstens einen Wellenabschnitt und dem wenigstens einen zweiten Flansch kann ein Drehmoment von dem wenigstens einen zweiten Flansch auf den wenigstens einen Wellenabschnitt übertragen werden.

Der wenigstens eine dritte Flansch kann gemäß einer Weiterbildung einstückig mit dem wenigstens einen Wellenabschnitt ausgebildet sein.

Die wenigstens eine erste und die wenigstens eine zweite fadenverstärkte Gelenkvorrichtung können beispielsweise in Form einer elastischen Gelenkscheibe ausgeführt sein. Eine derartige Gelenkscheibe kann eine Mehrzahl von Kopplungselementen, die in Umfangsrichtung in vorbestimmten Winkelabständen bezüglich einer Mittelachse der Gelenkvorrichtung angeordnet sind, eine Mehrzahl von Fadenpaketen, wobei jedes Fadenpaket jeweils zwei benachbarte Kopplungselemente umschlingt und jedes Kopplungselement von wenigstens zwei Fadenpaketen umschlungen wird, eine zur axialen Führung der Mehrzahl der Fadenpakete an wenigstens einem der Kopplungselementen angeordnete Stützeinrichtung, und eine elastischen Ummantelung umfassen, in die die Fadenpakete die Stützeinrichtungen und die Kopplungselemente zumindest teilweise eingebettet sind. Die Stützeinrichtung kann wenigstens zwei separat voneinander ausgebildete an einem der Kopplungselemente anbringbare Bundelemente aufweisen.

Ferner können die wenigstens eine erste und die wenigstens eine zweite Gelenkvorrichtung aus einer Mehrzahl von Kupplungselementen gebildet werden, die miteinander gekoppelt sind. Die Kupplungselemente können laschenförmig ausgebildet sein. Jedes Kupplungselement umfasst einen elastischen Körper, in den wenigstens ein Fadenpaket eingebettet ist, das wenigstens zwei Kopplungselemente umschlingt.

Die Kupplungsvorrichtungen gemäß der Erfindung können in Fahrzeugen, insbesondere in Niederflurfahrzeugen, mit Radsätzen und Lösrädern eingesetzt werden. Bei einem Fahrzeug mit Radsätzen ist pro Radsatz nur eine Kupplung auf einer Fahrzeugseite vorgesehen, da eine Radsatzwelle das Drehmoment auf die andere Fahrzeugseite überträgt.

Die vorliegende Erfindung betrifft ferner eine Antriebsanordnung für ein Fahrzeug, insbesondere ein Niederflurfahrzeug. Die Antriebsanordnung umfasst wenigstens einen Motor, der mit wenigstens einem Getriebe gekoppelt ist. Das wenigstens eine Getriebe ist wenigstens einem anzutreibenden Fahrzeugrad zugeordnet. Zwischen dem wenigstens einen Getriebe und dem wenigstens einen Fahrzeugrad ist wenigstens eine Kupplungsvorrichtung der voranstehend beschriebenen Art angeordnet.

Die Kupplungsvorrichtung der voranstehend beschriebenen Art verbindet somit das Getriebe mit dem anzutreibenden Fahrzeugrad. Die Kupplungsvorrichtung dient unter anderem zum Ausgleich von Relativbewegungen, die zwischen dem an einem Fahrzeugrahmen oder im Fall eines Schienenfahrzeugs an einem Drehgestell montierten Motor mit dem Getriebe und dem anzutreibenden Rad des Fahrzeugs auftreten können. Um die ungefederten Massen am Rad des Fahrzeugs reduzieren zu können, werden der Motor und das Getriebe elastisch an einem Fahrzeugrahmen oder einem Drehgestell angebracht bzw. gelagert. Aufgrund dieser elastischen Lagerung des Motors und des Getriebes kann es zu den oben erwähnten Relativbewegungen zwischen dem Fahrzeugrad und dem Motor kommen, die durch die Kupplungsvorrichtung bzw. deren fadenverstärkte Gelenkvorrichtungen ausgeglichen werden können.

Die zweite fadenverstärkte Gelenkvorrichtung kann direkt an dem Fahrzeugrad angebracht werden. Ferner kann auch ein Abschnitt der Achse vorgesehen sein, der zur Verbindung des Fahrzeugrades mit der zweiten fadenverstärkten Kupplung dienen kann. An dem Rad oder an dem Achsenabschnitt werden entsprechende Öffnungen ausgebildet, die zur Verschraubung der zweiten fadenverstärkten Gelenkvorrichtung mit dem Rad bzw. mit dem Achsenabschnitt dienen.

Gemäß einer Weiterbildung der Erfindung kann das wenigstens eine Fahrzeugrad mit der wenigstens einen zweiten fadenverstärkten Gelenkvorrichtung der Kupplungsvorrichtung gekoppelt sein. Es ist erfindungsgemäß ferner möglich, dass die wenigstens eine zweite Gelenkvorrichtung mit einer Achse des anzutreibenden Fahrzeugrades gekoppelt ist.

Der wenigstens eine erste Flansch der Kupplungsvorrichtung kann wenigstens eine Verzahnung aufweisen. Die wenigstens eine Verzahnung des ersten Flansches kann mit wenigstens einer Verzahnung an einem Wellenabschnitt des wenigstens einen Getriebes koppelbar sein.

Die vorliegende Erfindung betrifft ferner ein Niederflurfahrzeug mit wenigstens einer Antriebsanordnung der voranstehend beschriebenen Art.

Im Folgenden wird eine beispielhafte Ausführungsform der vorliegenden Erfindung mit Bezug auf die beigefügten Figuren beschrieben. Dabei gilt:
- Fig. 1: zeigt eine perspektivische Ansicht einer Antriebsanordnung gemäß einer Ausführungsform der Erfindung;
- Fig. 2: zeigt eine Draufsicht der Antriebsanordnung gemäß der Ausführungsform der Erfindung;
- Fig. 3: zeigt eine Schnittansicht der Antriebsanordnung;
- Fig. 4: zeigt eine perspektivische Ansicht einer Kupplungsvorrichtung gemäß der Erfindung;
- Fig. 5: zeigt eine Schnittansicht der Kupplungsvorrichtung gemäß der Erfindung;
- Fig. 6: zeigt eine perspektivische Ansicht einer fadenverstärkten Gelenkvorrichtung gemäß einer ersten Ausführungsform der Erfindung;
- Fig. 7: zeigt eine weitere perspektivische Ansicht der fadenverstärkten Gelenkvorrichtung gemäß der ersten Ausführungsform der Erfindung;
- Fig. 8: zeigt eine Vorderansicht der fadenverstärkten Gelenkvorrichtung gemäß der ersten Ausführungsform der Erfindung;
- Fig. 9: zeigt eine Schnittansicht entlang der Schnittlinie IX-IX in Fig. 8;
- Fig. 10: zeigt eine Vorderansicht der fadenverstärkten Gelenkvorrichtung gemäß der ersten Ausführungsform der Erfindung;
- Fig. 11: zeigt eine Schnittansicht entlang der Schnittlinie XI-XI in Fig. 10;
- Fig. 12: zeigt eine perspektivische Ansicht eines Grundkörpers der fadenverstärkten Gelenkvorrichtung gemäß der ersten Ausführungsform der Erfindung;
- Fig. 13: zeigt eine Vorderansicht des Grundkörpers der fadenverstärkten Gelenkvorrichtung gemäß Fig. 12;
- Fig. 14: zeigt eine Schnittansicht entlang der Schnittlinie XIV-XIV in Fig. 13;
- Fig. 15: zeigt die perspektivische Ansicht gemäß Fig.1 mit an den Getrieben angeordneten Gehäusen;
- Fig. 16: zeigt eine perspektivische Ansicht einer fadenverstärkten Gelenkvorrichtung gemäß einer zweiten Ausführungsform der Erfindung;
- Fig. 17: zeigt eine Draufsicht der fadenverstärkten Gelenkvorrichtung gemäß der zweiten Ausführungsform der Erfindung;
- Fig. 18: zeigt eine Schnittansicht entlang der Schnittlinie XVIII-XVIII in Fig. 17;
- Fig. 19: zeigt eine perspektivische Ansicht einer Kupplungsvorrichtung mit einer fadenverstärkten Gelenkvorrichtung gemäß der zweiten Ausführungsform der Erfindung;
- Fig. 20: zeigt eine Draufsicht der Kupplungsvorrichtung gemäß Fig. 19;
- Fig. 21: zeigt eine Schnittansicht entlang der Schnittlinie XXI-XXI in Fig. 20;
- Fig. 22: zeigt eine Kupplungsvorrichtung mit einer fadenverstärkten Gelenkvorrichtung gemäß der zweiten Ausführungsform der Erfindung;
- Fig. 23: zeigt eine Draufsicht der Kupplungsvorrichtung gemäß Fig. 22;
- Fig. 24: zeigt eine Schnittansicht entlang der Schnittlinie XXIV-XXIV in Fig. 23;
- Fig. 25: zeigt eine perspektivische Ansicht einer fadenverstärkten Gelenkvorrichtung gemäß einer dritten Ausführungsform der Erfindung;
- Fig. 26: zeigt eine Draufsicht der fadenverstärkten Gelenkvorrichtung gemäß der dritten Ausführungsform der Erfindung; und
- Fig. 27: zeigt eine Schnittansicht entlang der Schnittlinie XXVII-XXVII in Fig. 26.

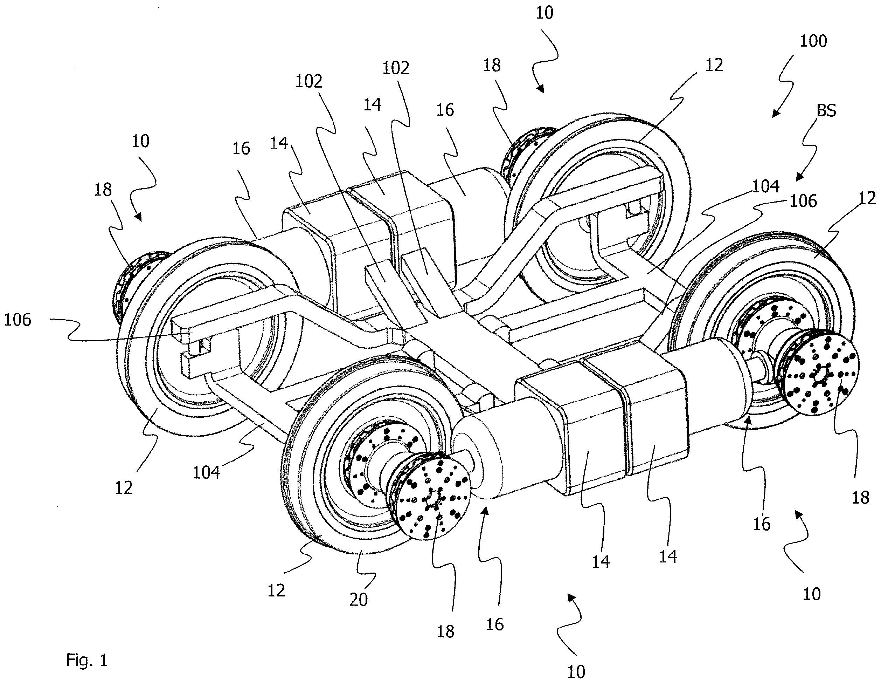

Fig. 1 zeigt eine perspektivische Ansicht eines Teils eines Fahrwerks 100 eines Schienenfahrzeugs. Das Fahrwerk kann beispielsweise ein Drehgestell eines Schienenfahrzeugs sein. An dem Drehgestell 100 sind vier Antriebsanordnungen 10 angeordnet.

Jede Antriebsanordnung 10 ist einem Schienenfahrzeugrad 12 zugeordnet und umfasst einen Motor 14, ein Getriebe 16 und eine Kupplungsvorrichtung 18. Die Kupplungsvorrichtung 18 ist mit dem Schienenfahrzeugrad 12 verbunden. Die Kupplungsvorrichtung 18 ist an der dem Fahrwerk 100 abgewandten Seite 20 des Schienenfahrzeugrades angeordnet. Die Kupplungsvorrichtung 18 ist direkt mit dem Schienenfahrzeugrad 12 verbunden. Die Kupplungsvorrichtung 18 ist zwischen dem Getriebe 16 und dem Schienenfahrzeugrad 12 vorgesehen und damit abtriebsseitig angeordnet. In diesem Fall sind sowohl der Motor 14 als auch das Getriebe 16 gefedert. Beide zählen dementsprechend zur gefederten Masse. Man spricht in diesem Fall auch von einem voll abgefederten System.

Die Motoren 14 sind über Verbindungselemente 102 an dem Fahrwerk 100 angebracht. Die Schienenfahrzeugräder 12 sind mit Querholmen 104 und Längsholmen 106 des Fahrwerks 100 verbunden. Die Antriebsanordnungen 10 sind außerhalb eines zwischen den Schienenfahrzeugrädern 12 eingeschlossenen Bereichs BS des Fahrwerks 100 angeordnet. Der Bereich BS wird von den Querholmen 104 und den Längsholmen 106 des Fahrwerks 100 festgelegt. Die Querholme 104 und die Längsholme 106 erstrecken sich abschnittsweise unterhalb der Achsen der Räder 12. Dies ist charakteristisch für Niederflurfahrzeuge. Dadurch wird die Anordnung der Fahrzeuginnenböden unterhalb der Radachsen bzw. im Bereich der Radachsen ermöglicht.

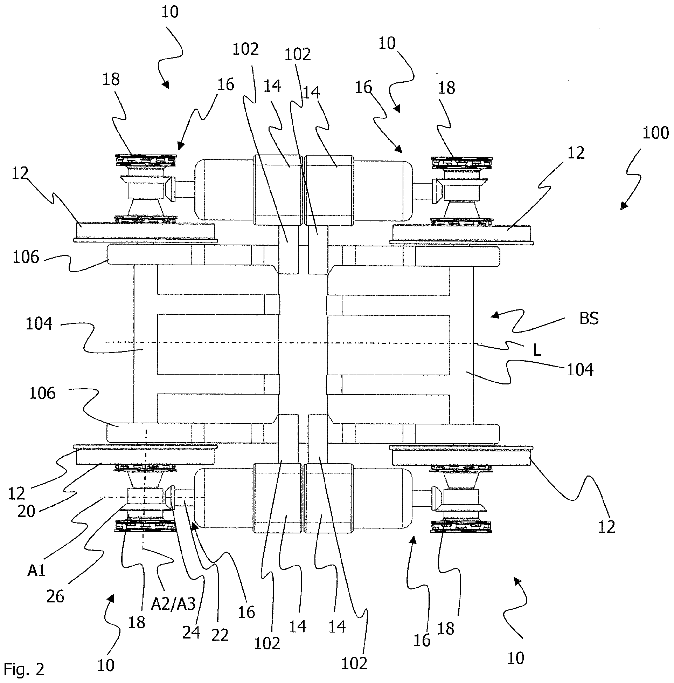

Fig. 2 zeigt eine Draufsicht des Drehgestells bzw. Fahrwerks 100 mit den daran angeordneten Antriebsanordnungen 10. Die Antriebsanordnungen 10 umfassen jeweils einen Motor 14, ein Getriebe 16 und die Kupplungsvorrichtung 18. Die Antriebsanordnungen 10 sind außerhalb des von den Holmen 104 und 106 festgelegten Bereichs BS an der Außenseite 20 der Schienenfahrzeugräder 12 vorgesehen.

Das Getriebe 16 kann beispielsweise ein Kegelradgetriebe sein, bei dem eine Antriebswelle 22 ein Ritzel 24 umfasst, das ein Tellerrad 26 antreibt. Die Achse A1 der Welle 22 und die Achse A2 des Tellerrads 24 verlaufen senkrecht zueinander, d.h. die Achsen A1 und A2 schneiden sich. Die Achse A2 stimmt mit der Achse A3 der Kupplungsvorrichtung 18 bzw. des Schienenfahrzeugrades 12 überein. Dementsprechend schneiden sich auch die Achse A3 der Kupplungsvorrichtung 18 und die Achse A1 der Welle 22 des Getriebes 16.

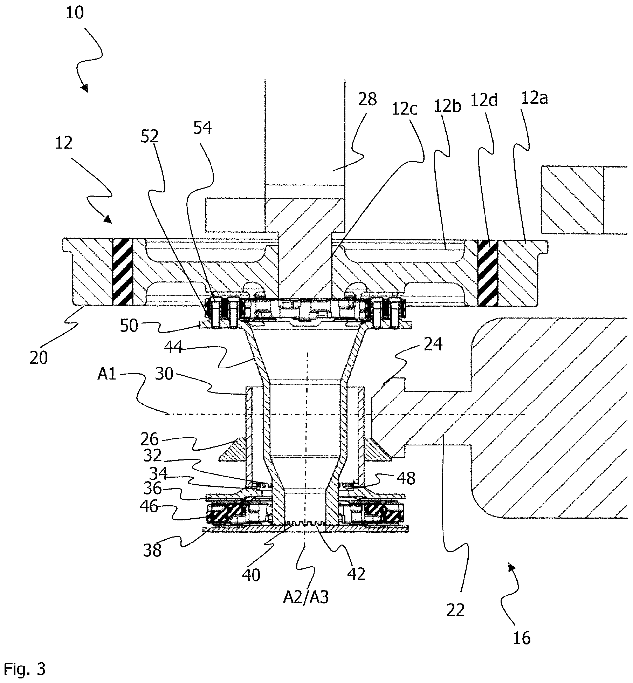

Die Achse A1 verläuft parallel zur Längsachse L des Fahrwerks 100. Die Achse A3 der Kupplungsvorrichtung 18 erstreckt sich quer zur Längsachse L des Fahrwerks 100. Fig. 3 zeigt eine Schnittansicht der Antriebsanordnung 10, in der das Getriebe 16, die Kupplungsvorrichtung 18 sowie das Schienenfahrzeugrad 12 mit seiner Achse 28 erkennbar sind.

Das Tellerrad 26 des Getriebes 16 ist mit einem Hohlwellenabschnitt 30 drehfest verbunden. Der Wellenabschnitt 30 weist eine Verzahnung 32 auf. Die Verzahnung 32 steht mit einer korrespondierenden Verzahnung 34 des ersten Flansches 36 im Eingriff. Ein zweiter Flansch 38 weist eine Verzahnung 40 auf, die in eine korrespondierende Verzahnung 42 eines Hohlwellenabschnitts 44 eingreift. Zwischen dem ersten Flansch 36 und dem zweiten Flansch 38 ist eine erste fadenverstärkte Gelenkvorrichtung 46 vorgesehen. Die fadenverstärkte Gelenkvorrichtung 46 ist gemäß dieser Ausführungsform in Form einer elastischen Gelenkscheibe ausgebildet. Der Hohlwellenabschnitt 44 erstreckt sich durch eine Öffnung 48 des ersten Flansches 36 in Richtung des Schienenfahrzeugrads 12. An dem Hohlwellenabschnitt 44 ist ein dritter Flansch 50 ausgebildet, an dem eine zweite fadenverstärkte Gelenkvorrichtung 52 angeordnet ist. Die fadenverstärkte Gelenkvorrichtung 52 ist mit dem dritten Flansch 50 über Schrauben 54 verschraubt. Die zweite fadenverstärkte Gelenkvorrichtung 52 ist ebenfalls in Form einer elastischen Gelenkscheibe ausgebildet. Die zweite fadenverstärkte Gelenkvorrichtung 52 ist mit dem Schienenfahrzeugrad 12 verbunden und treibt dieses an.

Das Schienenfahrzeugrad 12 umfasst einen Radreifen 12a und eine Nabe 12b mit einer Öffnung 12c zur Aufnahme der Achse 28. Zwischen der Nabe 12b und dem Radreifen 12a ist eine elastische Gummispur 12d vorgesehen.

Von dem Motor 14 wird das Drehmoment auf das Getriebe 16 übertragen. Von dem Getriebe 16 wird das Drehmoment über den Hohlwellenabschnitt 30 auf den ersten Flansch 36 übertragen. Von dem ersten Flansch 36 wird das Drehmoment über die erste fadenverstärkte Gelenkvorrichtung 46 auf den zweiten Flansch 38 und damit auf den Hohlwellenabschnitt 44 geleitet. Der Hohlwellenabschnitt 44 überträgt das Drehmoment auf den dritten Flansch 50, der mit der zweiten fadenverstärkten Gelenkvorrichtung 52 verbunden ist. Die zweite fadenverstärkte Gelenkvorrichtung 52 überträgt das Drehmoment auf das Rad 12 und treibt dieses damit an.

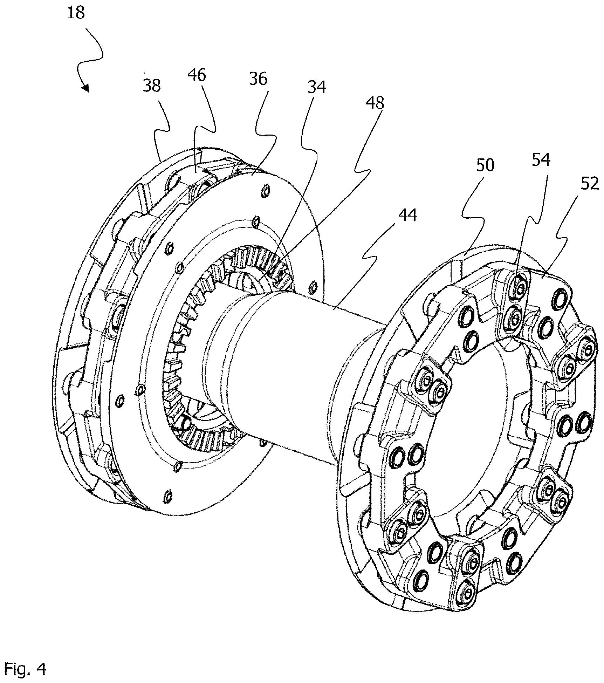

Fig. 4 zeigt eine perspektivische Ansicht der Kupplungsvorrichtung 18.

Der erste Flansch 36 umfasst die Verzahnung 34, die, wie in Fig. 3 gezeigt ist, zur Verbindung mit dem Getriebe 16 bzw. dem Hohlwellenabschnitt 30 (nicht gezeigt) des Getriebes 16 dient. Der erste Flansch 36 ist über die erste fadenverstärkte Gelenkvorrichtung bzw. Gelenkscheibe 46 mit dem zweiten Flansch 38 verbunden. Die Flansche 36 und 38 können mit der Gelenkscheibe 46 verschraubt sein. Der zweite Flansch 38 ist mit dem Hohlwellenabschnitt 44 verbunden. Der Hohlwellenabschnitt 44 erstreckt sich durch die Öffnung 48 des ersten Flansches 36 in Richtung der zweiten fadenverstärkten Gelenkvorrichtung 52 bzw. der elastischen Gelenkscheibe 52. Der Hohlwellenabschnitt 44 umfasst einen dritten Flansch 50, der über Schrauben 54 mit der elastischen Gelenkvorrichtung 52 verbunden ist.

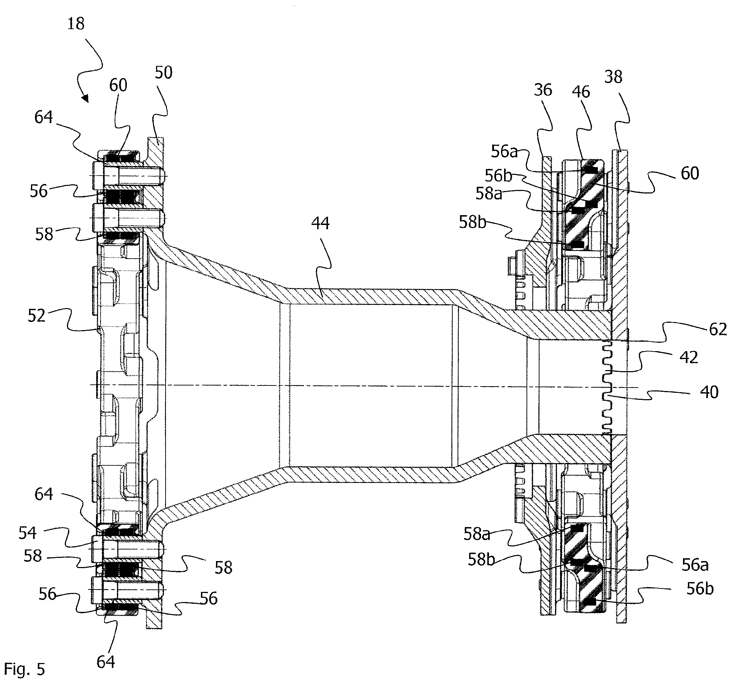

Fig. 5 zeigt eine Schnittansicht der Kupplungsvorrichtung 18.

Zwischen dem ersten Flansch 36 und dem zweiten Flansch 38 ist die fadenverstärkte Gelenkvorrichtung bzw. die Gelenkscheibe 46 vorgesehen. Die fadenverstärkte Gelenkvorrichtung 46 umfasst Fadenpakete 56 und 58, von denen jeweils in Fig. 5 zwei Stränge 56a, 56b und 58a, 58b erkennbar sind. Die Fadenpakete 56 und 58 sind in eine gummielastische Ummantelung 60 eingebettet. Die erste fadenverstärkte Gelenkvorrichtung 46 dient zur Drehmomentübertragung von dem ersten Flansch 36 auf den zweiten Flansch 38.

Der zweite Flansch 38 weist eine Öffnung 62 auf. An der dem Hohlwellenabschnitt 44 zugewandten axialen Fläche des zweiten Flansches 38 ist die Verzahnung 40 ausgebildet, die in eine korrespondierende Verzahnung 42 des Hohlwellenabschnitts 44 eingreift. An dem Hohlwellenabschnitt 44 ist der dritte Flansch 50 vorgesehen, der mit der zweiten fadenverstärkten Gelenkvorrichtung bzw. der zweiten Gelenkscheibe 52 verbunden ist. Die fadenverstärkte Gelenkvorrichtung 52 ist mit dem dritten Flansch 50 über Schrauben 54 verbunden. Dazu weist die zweite fadenverstärkte Gelenkvorrichtung 52 Kopplungselemente 64 auf, über die die fadenverstärkte Gelenkvorrichtung 52 mittels der Schrauben 54 an den dritten Flansch 50 drehmomentübertragend angebunden werden kann.

Auch die zweite fadenverstärkte Gelenkvorrichtung 52 umfasst Fadenpakete 54 und 56, die in eine elastische Ummantelung 60 eingebettet sind.

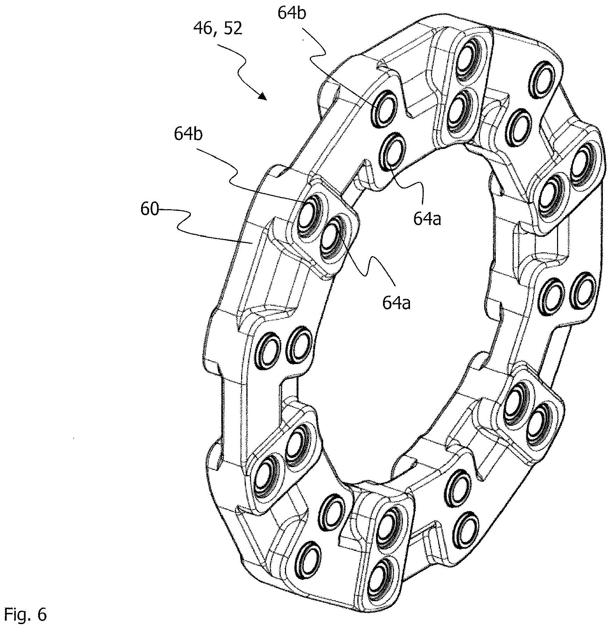

Fig. 6 zeigt eine perspektivische Ansicht einer fadenverstärkten Gelenkvorrichtung 46, 52 gemäß einer ersten Ausführungsform der Erfindung.

Die fadenverstärkte Gelenkvorrichtung 46, 52 gemäß der ersten Ausführungsform kann als erste und zweite elastische Gelenkvorrichtung 46, 52 in der Kupplungsvorrichtung 18 zum Einsatz kommen kann. Die elastische Gelenkvorrichtung 46, 52 umfasst die elastische Ummantelung 60, in die zumindest abschnittsweise die Kopplungselemente 64 eingebettet sind.

Die Gelenkscheibe 46, 52 ist zweireihig ausgebildet, d.h. die elastische Gelenkvorrichtung 46, 52 umfasst zwei Gruppen von Kopplungselementen 64a und 64b, die in radialer Richtung zueinander versetzt um den Umfang der elastischen Gelenkvorrichtung 46, 52 angeordnet sind. Jedes der Kopplungselemente 64a und 64b dient zur Kopplung der fadenverstärkten Gelenkvorrichtungen 46, 52 mit einem der Flansche 36, 38, 50 oder dem Schienenfahrzeugrad 12.

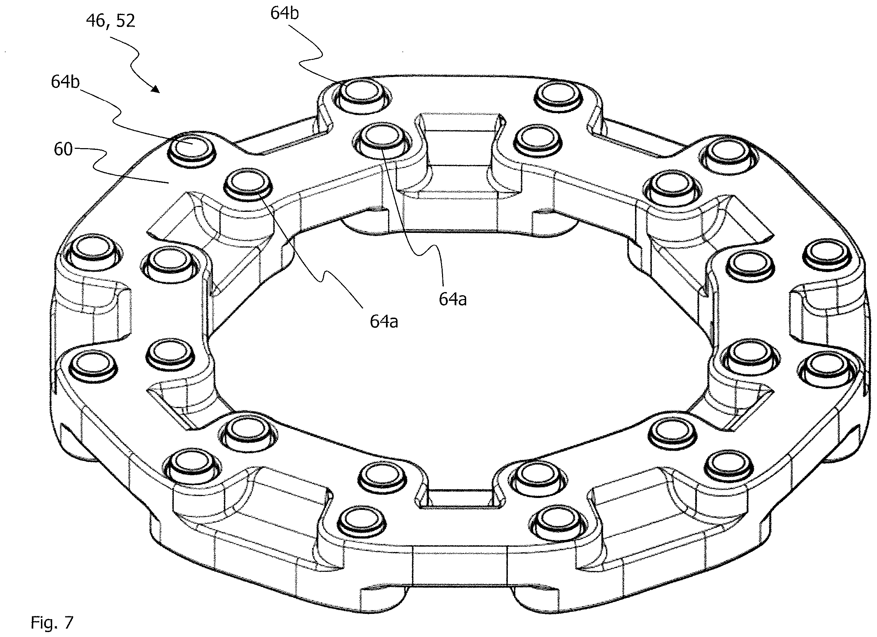

Fig. 7 zeigt eine weitere perspektivische Ansicht der fadenverstärkten Gelenkvorrichtung 46, 52. Die fadenverstärkte Gelenkvorrichtung 46, 52 umfasst eine erste Gruppe von Kopplungselementen 64a und eine zweite Gruppe von Kopplungselementen 64b. Die Kopplungselemente 64a sind auf einem ersten Radius und die Kopplungselemente 64b sind auf einem zweiten Radius angeordnet.

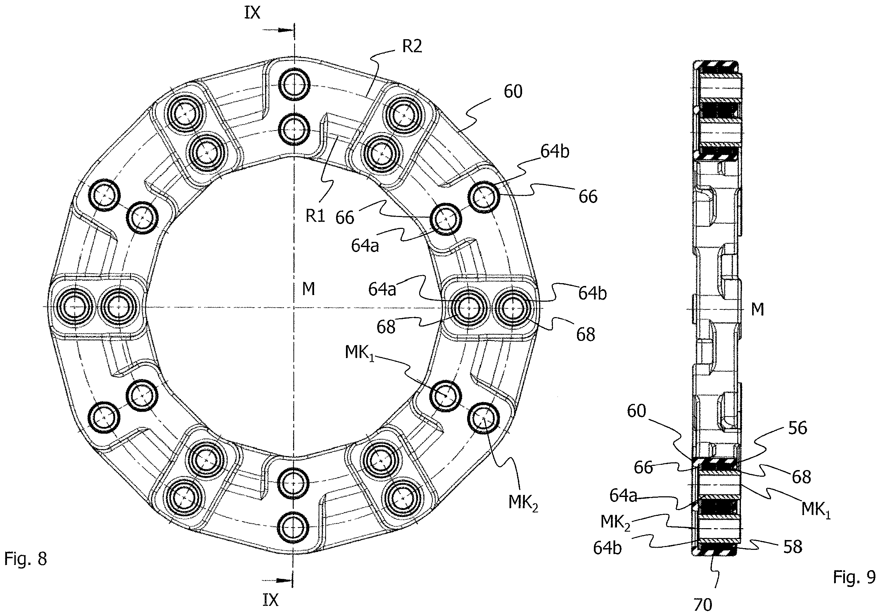

Fig. 8 zeigt eine Vorderansicht der elastischen Gelenkvorrichtung 46, 52 mit den Kopplungselementen 64a der ersten Gruppe und den Kopplungselementen 64b der zweiten Gruppe. Die Kopplungselemente 64a liegen allesamt auf einem ersten Radius R1 um die Mittelachse M der elastischen Gelenkvorrichtung 46, 52. Die Kopplungselemente 64b liegen wiederum allesamt auf einem zweiten Radius R2 um die Mittelachse M. Die buchsenförmigen Kopplungselemente 64a und 64b sind demnach in radialer Richtung um den Abstand R2-R1 zueinander versetzt angeordnet. Die Kopplungselemente 64a und 64b liegen in radialer Richtung in einer Flucht. Die Kopplungselemente 64a und 64b sind in Umfangsrichtung wechselweise mit zwei Arten von Bundelementen 66, 68 versehen. Die Kopplungselemente 64a und 64b sind zum Teil mit scheibenförmigen Bundelementen 66 versehen, wohingegen ein anderer Teil der Kopplungselemente 64a und 64b mit kragenförmigen Bundelementen 68 versehen ist. Die Kopplungselemente 64a, 64b mit den scheibenförmigen Bundelementen 66 und die Kopplungselemente 64a, 64b mit den kragenförmigen Bundelmenten 68 sind in Umfangsrichtung um 30° zueinander versetzt angeordnet. Die Mittelachsen MK₁ der Kopplungselemente 64a der ersten Gruppe sind auf dem ersten Radius R1 und die Mittelachsen MK₂ der Kopplungselemente 64b der zweiten Gruppe sind auf dem zweiten Radius R2 angeordnet.

Fig. 9 zeigt eine Schnittansicht entlang der Schnittlinie IX-IX in Fig. 8.

In Fig. 9 sind die Kopplungselemente 64a und 64b erkennbar, die von den Fadenpaketen 56 und 58 umschlungen werden. Die Fadenpakete 56 und 58 werden in Richtung der Mittelachse M an ihrer linken Seite mit scheibenförmigen Bundelementen 66 und an der in Richtung der Mittelachse M rechten Seite der Gelenkvorrichtung 46, 52 mit im Querschnitt L-förmigen Bundelementen 68 axial gesichert. Die scheibenförmigen Bundelemente 66 sind abschnittsweise an ihrem radialen Ende mit der elastischen Ummantelung 58 umgeben.

Zwischen den Fadenpaketen 56 bzw. 58 ist ein weiteres Bundelement 70 vorgesehen, das die Fadenpaketpaare 56 und 58 voneinander trennt. Die axialen Enden der Kopplungselemente 64a und 64b, die mit den scheibenförmigen Bundelementen 66 versehen sind, dienen als Angriffspunkt bzw. Anlagepunkt für die Schraubenköpfe der Schrauben 54 (siehe Fig. 5).

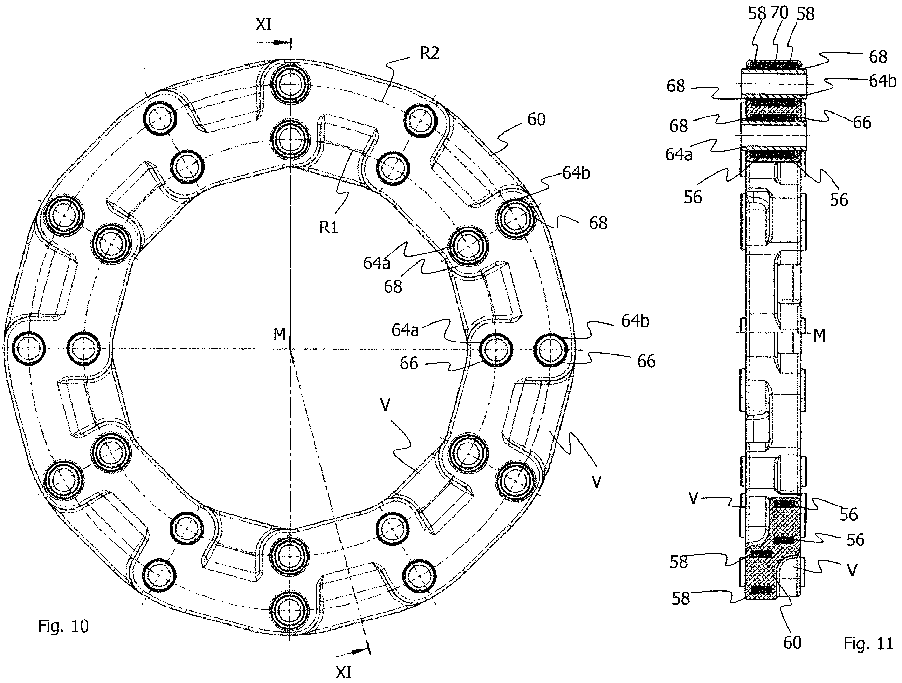

Fig. 10 zeigt eine Vorderansicht der fadenverstärkten Gelenkvorrichtung 46, 52. Die Draufsicht gemäß Fig. 10 entspricht weitestgehend der Draufsicht der fadenverstärkten Gelenkvorrichtung 46, 52 gemäß Fig. 8. Lediglich die Schnittlinie XI-XI gemäß Fig. 10 zeigt einen anderen Verlauf als die Schnittlinie IX-IX in Fig. 8.

Fig. 11 zeigt eine Schnittansicht entlang der Schnittlinie XI-XI in Fig. 10.

In Fig. 11 sind die Fadenpakete 56 erkennbar, die die Kopplungselemente 64a der ersten Gruppe umschlingen. Die Fadenpakete 58 umschlingen die Kopplungselemente 64b der zweiten Gruppe. Die Fadenpakete 58, die eine zweite Gruppe von Fadenpaketen bilden, verlaufen im Bereich zwischen den Kopplungselementen 64a und 64b in Richtung der Mittelachse M der fadenverstärkten Gelenkvorrichtung 64, 52 zueinander versetzt. Die Fadenpakete 56 und die Fadenpakete 58 weisen demnach nicht nur einen radialen Versatz zueinander auf, sondern auch einen Versatz in Richtung der Mittelachse M. Dies lässt sich auch an den Vertiefungen V in dem elastischen Körper 60 erkennen. Die Vertiefungen V liegen jeweils im Bereich zwischen den Kopplungselementen 64a und 64b. Die Tiefe der Vertiefungen V in dem elastischen Körper 60 entspricht im Wesentlichen der Erstreckung der fadenverstärkten Gelenkvorrichtung 46, 52 in Richtung der Mittelachse M abzüglich des Querschnitts eines Fadenpakets 56, 58 und der notwendigen Ummantelung des Fadenpakets durch den elastischen Körper 60.

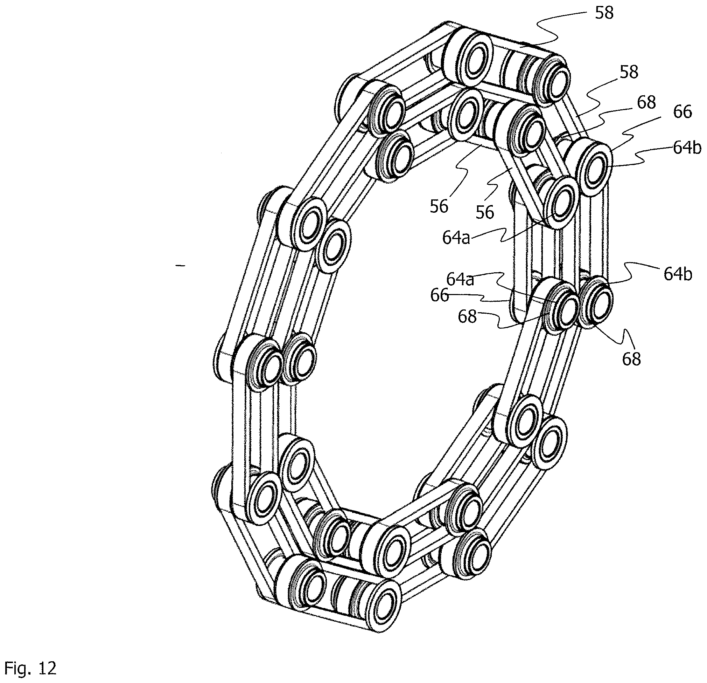

Fig. 12 zeigt eine perspektivische Ansicht des Grundkörpers der elastischen Gelenkvorrichtung 46, 52. Dementsprechend zeigen die folgenden Figuren den Grundkörper der elastischen Gelenkvorrichtungen ohne die elastische Ummantelung 60.

In Fig. 12 sind die laschenförmigen Fadenpakete 56 und 58 erkennbar, die jeweils paarweise ein Kopplungselement 64a, 64b umschlingen. Die Kopplungselemente 64a und 64b sind in Umfangsrichtung wechselweise mit den scheibenförmigen Bundelementen 66 und den im Querschnitt L-förmigen Bundelementen 68 versehen. Zudem ist jedes der Kopplungselemente 64a und 64b an einem seiner axialen Enden mit den scheibenförmigen Bundelementen 66 und an dem jeweils anderen axialen Ende mit einem im Querschnitt L-förmigen Bundelement 68 versehen. Die Kopplungselemente 64a der ersten Gruppe werden jeweils paarweise von den Fadenpaketen 56 umschlungen, die wechselweise auf Zug und Druck belastet werden. Die Fadenpakete 56 können einer ersten Gruppe zugeordnet werden. Die Fadenpakete 56 der ersten Gruppe bilden zusammen mit den Kopplungselementen 64a der ersten Gruppe eine erste Drehmomentübertragungskette. Die Kopplungselemente 64b der zweiten Gruppe werden jeweils paarweise von den Fadenpaketen 58 umschlungen, wobei jeweils eines der Fadenpakete 58 auf Zug und das andere auf Druck belastet wird. Die Fadenpakete 58 sind einer zweiten Gruppe zuzuordnen und bilden zusammen mit den Kopplungselementen 64b eine zweite Drehmomentübertragungskette.

Mit anderen Worten sind die Fadenpakete 56 ringförmig angeordnet und über die Kopplungselemente 64a drehmomentübertragend miteinander gekoppelt. Selbiges gilt für die Fadenpakete 58, die ringförmig angeordnet sind und drehmomentübertragend über die Kopplungselemente 64b gekoppelt werden.

Ferner ist in Fig. 12 erkennbar, dass die Fadenpakete 56 und 58 jeweils in axialer Richtung zueinander versetzt zu einander verlaufen, und die ihnen zugeordneten Kopplungselemente 64a und 64b umschlingen.

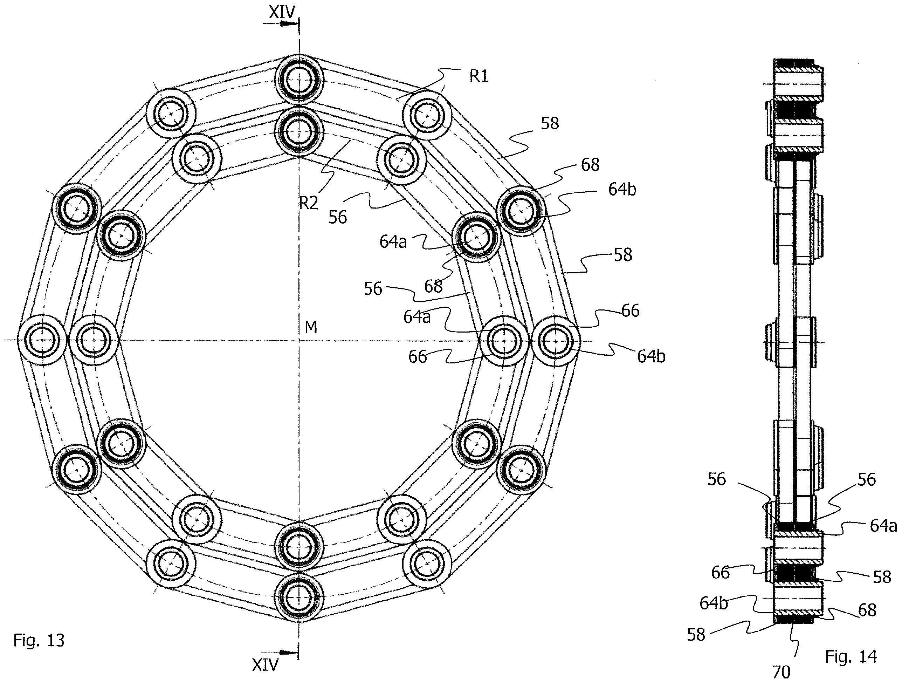

Fig. 13 zeigt eine Vorderansicht des Grundkörpers der elastischen Gelenkvorrichtung 46, 52.

Die Fadenpakete 56 liegen radial innerhalb der Fadenpakete 58, d.h. der von den Fadenpaketen 58 gebildete Ring umgibt den von den Fadenpaketen 56 gebildeten Ring. Die Fadenpakete 56 und 58 werden in Umfangsrichtung wechselweise auf jeder axialen Seite des elastischen Gelenkkörpers 46, 52 einmal mit scheibenförmigen Bundelementen 66 und mit im Querschnitt L-förmigen Kragenelementen 68 an den Kopplungselementen 64a und 64b in axialer Richtung gesichert.

Fig. 14 zeigt eine Schnittansicht entlang der Schnittlinie XIV-XIV in Fig. 13.

In Fig. 14 sind wiederum Kopplungselemente 64a und 64b erkennbar, die von zwei Fadenpaketen 56 bzw. 58 umschlungen werden. An den axialen Enden der Kopplungselemente 64a und 64b sind wechselweise scheibenförmige Bundelemente 66 und im Querschnitt L-förmige Kragenelemente 68 vorgesehen.

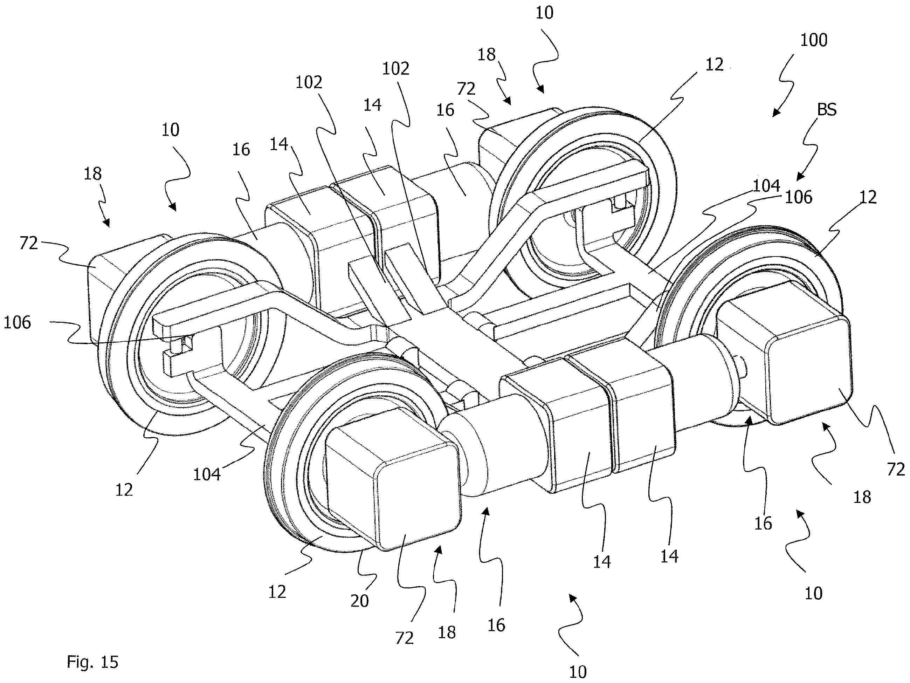

Fig. 15 zeigt eine perspektivische Ansicht, die weitestgehend der Ansicht gemäß Fig.1 entspricht. Die Getriebe 16 und die Kupplungsvorrichtungen 18 sind in Gehäusen 72 aufgenommen. In den Gehäusen 72 können Elemente (nicht gezeigt) zur Halterung bzw. Lagerung der Kupplungsvorrichtungen 18 vorgesehen bzw. ausgebildet sein. Die Gehäuse 72 überspannen den Bereich zwischen Motor 14 und dem Rad 12. Die Form der Gehäuse 72 wird so gewählt, dass das Gehäuse 72 bzw. seine Innenwände (nicht gezeigt) einen möglichst geringen Abstand zu dem Getriebe 16 und der Kupplungsvorrichtung 18 aufweisen.

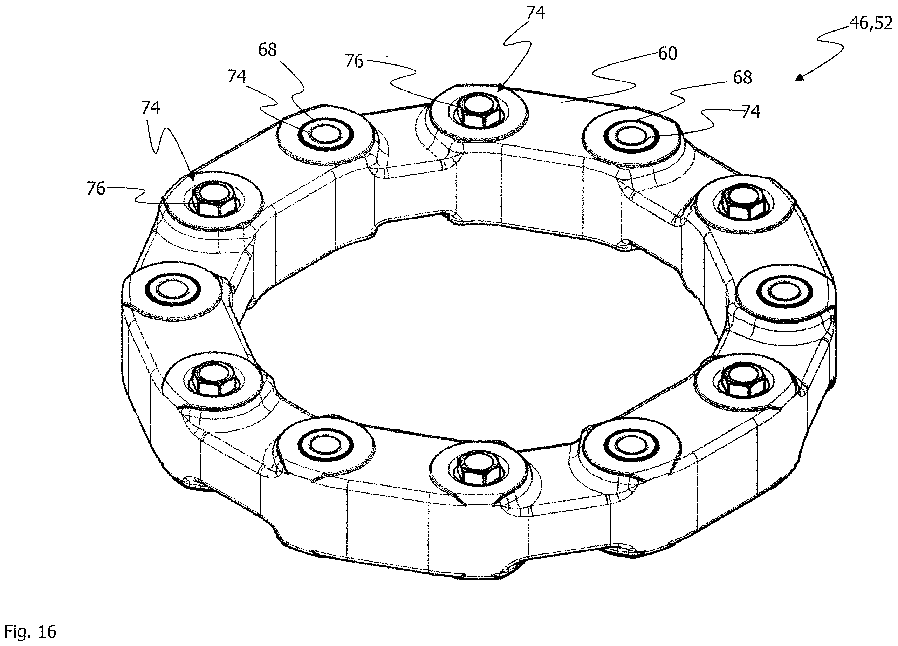

Fig. 16 zeigt eine perspektivische Ansicht einer fadenverstärkten Gelenkvorrichtung 46, 52 gemäß einer zweiten Ausführungsform der Erfindung.

Die fadenverstärkte Gelenkvorrichtung 46 gemäß dieser Ausführungsform weist Kopplungselemente 74 auf, die zumindest abschnittsweise in einen elastischen Körper 60 eingebettet sind.

Die Kopplungselemente 74 weisen an einem ihrer axialen Enden einen Schraubenkopf 76 auf. Der Schraubenkopf 76 ist gemäß dieser Ausführungsform in Form eines Sechskants ausgebildet. An dem dem Schraubenkopf 76 entgegengesetzten axialen Ende der Kopplungselemente 74 ist ein Bundelement 68 vorgesehen. In Umfangsrichtung der fadenverstärkten Gelenkvorrichtung 46 ist jeweils wechselweise der Schraubenkopf 76 und das dem Schraubenkopf 76 entgegengesetzte axiale Ende des Kopplungselements 74 mit dem Bundelement 68 erkennbar.

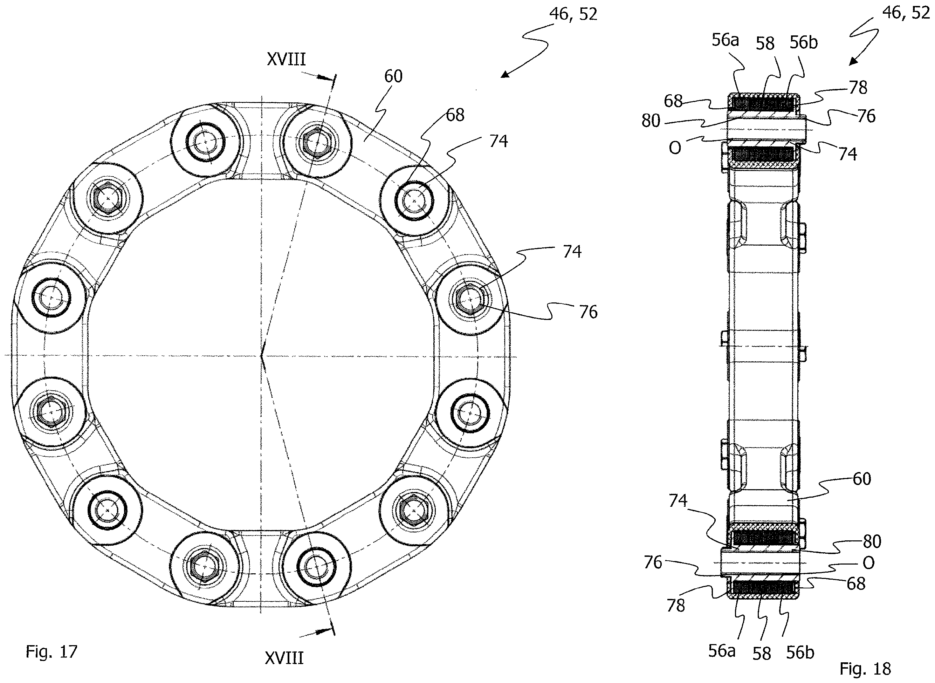

Fig. 17 zeigt eine Draufsicht der fadenverstärkten Gelenkvorrichtung 46.

In Fig. 17 sind die Kopplungselemente 74 mit ihrem Schraubenkopf 76 gezeigt. Der Schraubenkopf 76 ist, wie in Fig. 17 deutlich erkennbar ist, ein Sechskant.

Fig. 18 zeigt eine Schnittansicht entlang der Schnittlinie XVIII-XVIII in Fig. 17.

Die Kopplungselemente 74 weisen neben dem Schraubenkopf 76 ebenfalls einen als Bundelement wirkenden Bundabschnitt 78 auf. Der Bundabschnitt 78 dient zur axialen Sicherung der Fadenpakete 56a, 56b und 58 an dem Kopplungselement 74. Dazu wirkt der Bundabschnitt 78 mit dem Bundelement 68 zusammen. Das Bundelement 68 ist an dem dem Bundabschnitt 78 entgegengesetzten axialen Ende des Kopplungselements 74 vorgesehen. Der Bundabschnitt 78 und das Bundelement 68 halten die Fadenpakete 56a, 56b und 58 in ihrer vorbestimmten Position an dem Kopplungselement 74. Der Schraubenkopf 76 sowie der Bundabschnitt 78 sind einstückig mit dem Kopplungselement 76 ausgebildet.

Die Kopplungselemente 74 weisen eine Durchgangsöffnung O auf. In der Öffnung O ist ein Gewinde 80 vorgesehen, in das Befestigungsschrauben (nicht gezeigt) zur Befestigung der fadenverstärkten Gelenkvorrichtung 46, 52 an einem Flansch eingeschraubt werden können.

Die Fadenpakete 56a und 56b werden im Betrieb der fadenverstärkten Gelenkvorrichtung 46, 52 größtenteils auf Druck beansprucht. Das einen größeren Querschnitt aufweisende Fadenpaket 58 wird im Betrieb der fadenverstärkten Gelenkvorrichtung 46 hauptsächlich mit Zugkräften beaufschlagt.

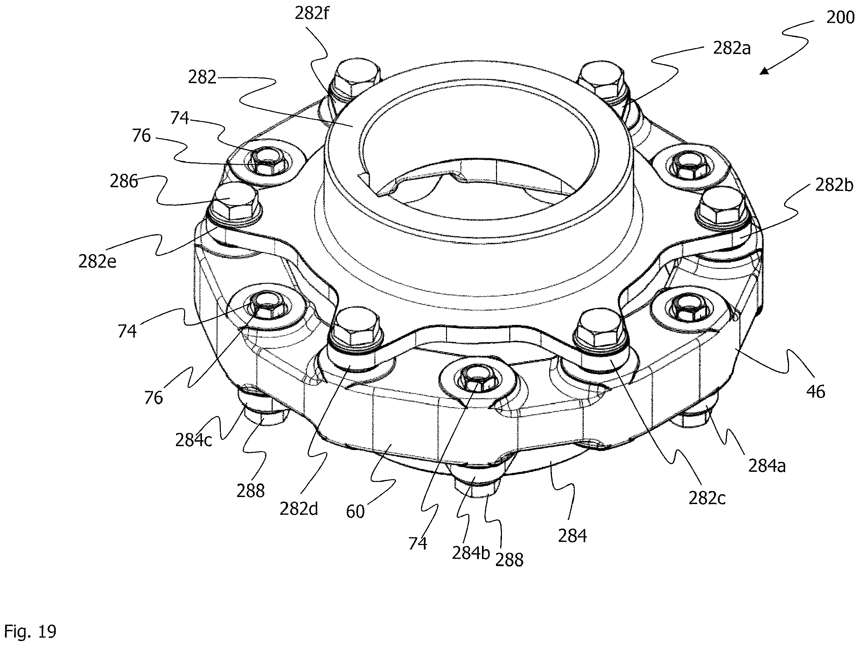

Fig. 19 zeigt eine Kupplungsvorrichtung 200 mit der fadenverstärkten Gelenkvorrichtung 46 gemäß der zweiten Ausführungsform.

Die Kupplungsvorrichtung 200 weist einen ersten Flansch 282 und einen zweiten Flansch 284 auf, die über die fadenverstärkte Gelenkvorrichtung 46 miteinander verbunden sind.

Der erste Flansch 282 weist Flanscharme 282a bis 282e auf. Der zweite Flansch 284 weist Flanscharme 284a bis 284c auf. Die Flanscharme 282a bis 282e des ersten Flansches 282 sind mittels Schrauben 286 mit der fadenverstärkten Gelenkvorrichtung 46 verbunden. In ähnlicher Weise sind die Flanscharme 284a bis 284c des zweiten Flansches 284 über Schrauben 288 mit der fadenverstärkten Gelenkvorrichtung 46 verschraubt. Die Schrauben 286 und 288 werden dabei in die Kopplungselemente 74 mit dem Gewinde 80 (Fig. 18) eingeschraubt. Der Schraubenkopf 76 dient dabei zum Gegenhalten des Kopplungselements 74 beim Einschrauben der Schrauben 286, 288. Beim Einschrauben der Schrauben 86 und 88 mit der fadenverstärkten Gelenkvorrichtung 46 wird das Kopplungselement 74 mittels seines Schraubenkopfs 76 mit Hilfe eines Schraubenschlüssels gegengehalten, so dass kein Drehmoment auf die fadenverstärkte Gelenkvorrichtung 46 übertragen wird.

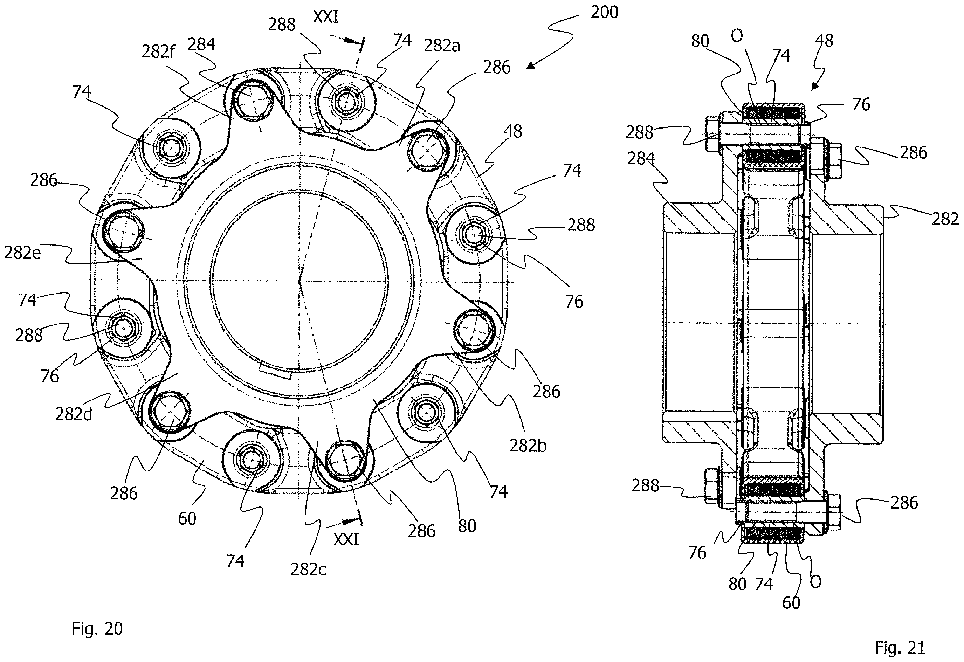

Fig. 20 zeigt eine Draufsicht der Kupplungsvorrichtung 200, in der der erste Flansch 282 mit seinen Flanscharmen 282a bis 282f erkennbar ist. Die Flanscharme 282a bis 282f sind über die Schrauben 286 mit der fadenverstärkten Gelenkvorrichtung 46 verbunden, d.h. die Schrauben 286 wurden in das Kopplungselement 74 mit seinem Gewinde 80 eingeschraubt. Gleiches gilt für die Schrauben 288.

Fig. 21 zeigt eine Schnittansicht entlang der Schnittlinie XXI-XXI in Fig. 20.

Die Schrauben 286 und 288 wurden in die Öffnung O des Kopplungselements 74 mit dem Gewinde 80 eingeschraubt. In Fig. 21 ist ferner erkennbar, dass der Bundabschnitt 78 an dem axialen Ende des Kopplungselements 74 vorgesehen ist, an dem sich auch der Schraubenkopf 76 befindet. Während des Einschraubens der Schrauben 286 und 288 werden die Kopplungselemente 74 mittels des Schraubenkopfes 76 gehalten, so dass eine Drehmomentübertragung auf die Kopplungselemente 74 vermieden wird. Insbesondere soll dadurch eine Drehmomentübertragung auf die Fadenpakete 56a, 56b und 58 und den elastischen Körper 60 vermieden werden. Die Schrauben 286 und 288 mit ihren Schraubenköpfen befinden sich an der der fadenverstärkten Gelenkvorrichtung 46 abgewandten Seite der Flansche 282 und 284.

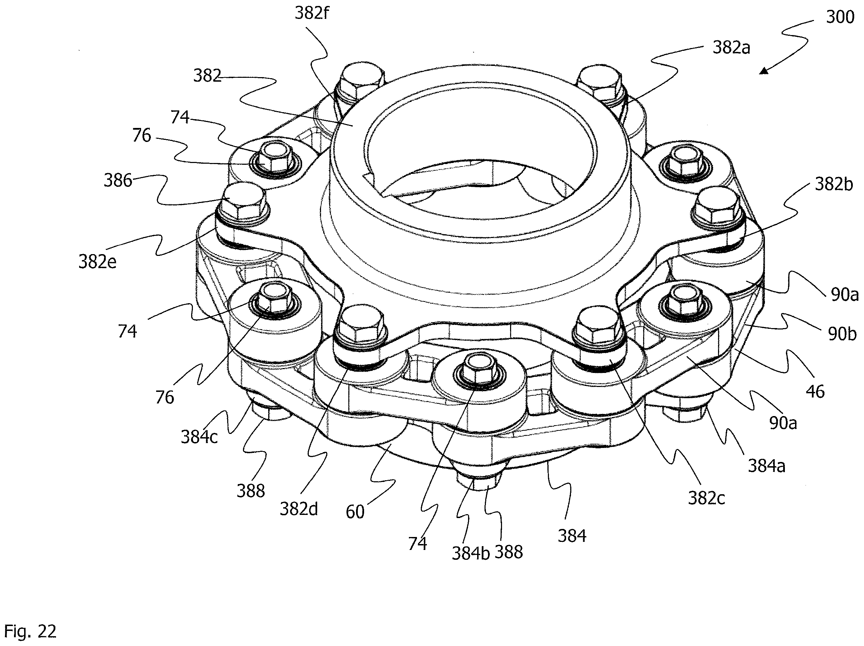

Fig. 22 zeigt eine Kupplungsvorrichtung 300, die weitestgehend der mit Bezug auf die Fig. 19 bis 21 beschriebenen Kupplungsvorrichtung 200 entspricht.

Die eigentlichen Unterschiede zwischen dieser Ausführungsform und der voranstehend beschriebenen Ausführungsform liegen in der elastischen Gelenkvorrichtung 46, die sich gemäß dieser Ausführungsform aus einer Mehrzahl von Kupplungselementen 90a und 90b mit elastischen Körpern 60 zusammensetzt. Die Kupplungselemente 90a und 90b sind jeweils mit einer Schraube 386, 388 mit den Flanschen 382 und 384 bzw. deren Flanscharme 382a bis 382e und 384a bis 384c verschraubt. Dazu sind an den Kupplungselemente 90a und 90b die Kopplungselemente 74 mit einem Schraubenkopf 76 vorgesehen. Wie bei der voranstehend beschriebenen Ausführungsform dient der Schraubenkopf 76 in Form eines Sechskants dazu, beim Einschrauben der Schrauben 386 und 388 in die Kopplungselemente 74 zum Gegenhalten der Kopplungselemente 74, so dass kein Drehmoment auf die Kupplungselemente 90a und 90b übertragen wird.

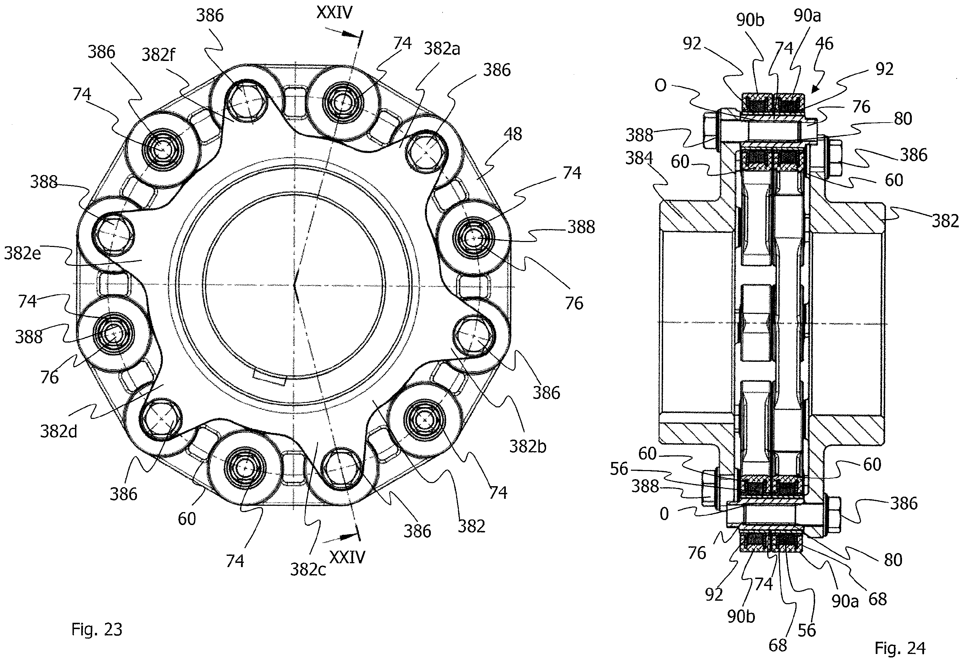

Fig. 23 zeigt eine Draufsicht der Kupplungsvorrichtung 300, in der der erste Flansch 384 mit den Schrauben 386 erkennbar ist. Die Schrauben 386 sind mit den Kopplungselementen 74 der fadenverstärkten Gelenkvorrichtung 46 verschraubt. Gleiches gilt für die Schrauben 388.

Fig. 24 zeigt eine Schnittansicht entlang der Schnittlinie XXIV-XXIV in Fig. 23.

In Fig. 24 sind die Kupplungselemente 90a und 90b erkennbar, die zusammen die fadenverstärkte Gelenkvorrichtung 46 bilden. Die Kupplungselemente 90a und 90b weisen jeweils einen elastischen Körper 60 auf. In dem elastischen Körper 60 eines jeden Kupplungselements 90a und 90b ist ein Fadenpaket 56 mit Bundelementen 68 eingebettet. Die Bundelemente 68 dienen zur Sicherung des Fadenpakets 56 an einer Buchse 92. Die Bundelemente 68 sind im Querschnitt L-förmig ausgebildet und liegen mit ihrem Rohrabschnitt an der Buchse 92 an. Die Bundelemente 68 können auf die Buchse 92 aufgepresst sein.

Jedes Kopplungselement 74 verbindet zwei Kupplungselemente 90a und 90b miteinander. Jedes Kopplungselement 74 verbindet dementsprechend zwei Buchsen 92 der Kupplungselemente 90a und 90b. Die Kupplungselemente 74 weisen wiederum eine zentrale Öffnung O auf, in der ein Gewinde 80 vorgesehen ist. In das Gewinde 80 der Kopplungselemente 74 können die Schrauben 86 und 88 eingeschraubt werden. Auf diese Weise kann die fadenverstärkte Gelenkvorrichtung 46 mit den Flanschen 382 und 384 verbunden werden.

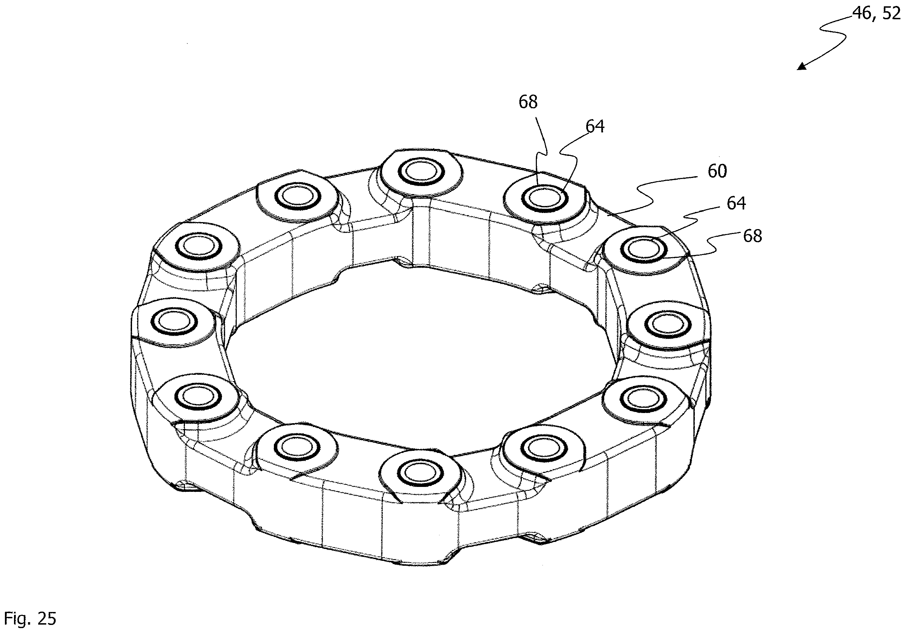

Fig. 25 zeigt eine perspektivische Ansicht einer fadenverstärkten Gelenkvorrichtung gemäß einer dritten Ausführungsform der Erfindung.

Die fadenverstärkte Gelenkvorrichtung 46 weist einen elastischen Körper 60 auf, in den die Kopplungselemente 64 und die Bundelemente 68 an den Kopplungselementen 64 zumindest abschnittsweise eingebettet sind.

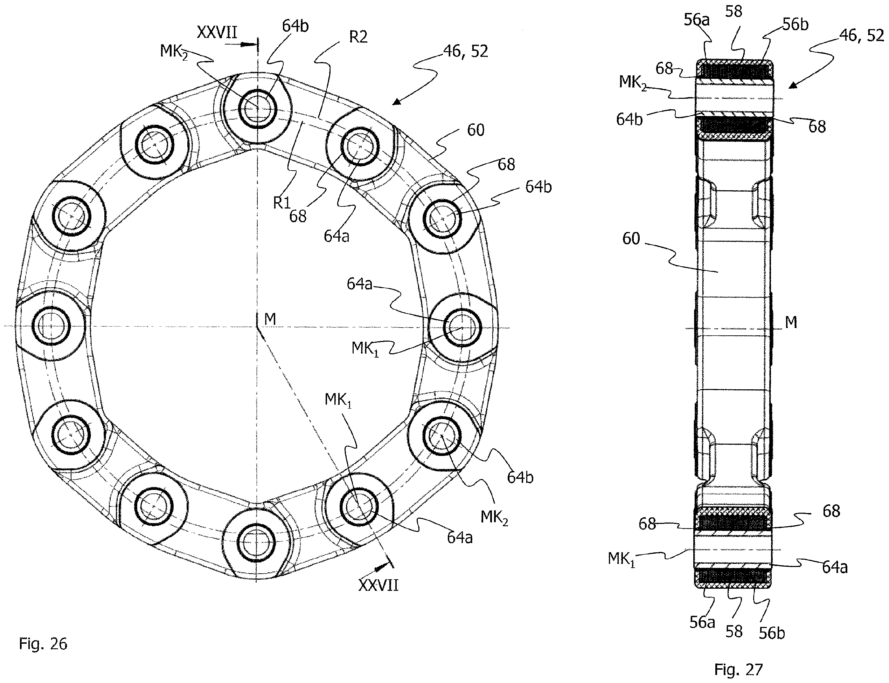

Fig. 26 zeigt eine Draufsicht der fadenverstärkten Gelenkvorrichtung 46.

Die Kopplungselemente 64 lassen sich in eine erste Gruppe von Kopplungselementen 64a und eine zweite Gruppe von Kopplungselementen 64b unterteilen. Die erste Gruppe von Kopplungselementen 64a ist mit ihren Mittelachsen MK₁ auf einem ersten Radius R1 angeordnet. Die zweite Gruppe der Kopplungselemente 64b ist mit ihren Mittelachsen MK₂ auf einem zweiten Radius R2 angeordnet. Die Kopplungselemente 64a der ersten Gruppe und die Kopplungselemente 64b der zweiten Gruppe sind somit um den Betrag R2-R1 in radialer Richtung zueinander versetzt. Die Kopplungselemente 64a und die Kopplungselemente 64b sind in Umfangsrichtung der fadenverstärkten Gelenkvorrichtung 46 wechselweise angeordnet. Die Kopplungselemente 64a der ersten Gruppe und die Kopplungselemente 64b der zweiten Gruppe werden jeweils über ein Fadenpaket (Fig. 27) miteinander gekoppelt. Durch diesen Versatz in radialer Richtung der Kopplungselemente 64a und 64b verlaufen die Fadenpakete 56a, 56b und 58 (Fig. 27) schräg zwischen den zu verbindenden Kopplungselementen 64a und 64b. Die Fadenpakete 56a, 56b und 58 weisen dadurch im Betrieb der fadenverstärkten Gelenkvorrichtung 46 eine tangentiale Ausrichtung auf. Die tangentiale Ausrichtung der Fadenpakete 56a, 56b und 58 ermöglicht eine Kennlinie mit einem weichen Nulldurchgang. Ferner wird durch die Anordnung der Kopplungselemente 64a auf dem Radius R1 und der Kopplungselemente 64b auf dem Radius R2 eine größere radiale Auslenkung ermöglicht. Die Auslenkung wird dabei in der Größe des Betrags R2-R1 zugelassen. Die radiale Auslenkung liegt demnach in einem Bereich der Differenz zwischen dem Radius R2 und dem Radius R1.

Fig. 27 zeigt eine Schnittansicht entlang der Schnittlinie XXVI-XXVI in Fig. 26.

Die Kopplungselemente 64a und 64b werden von Fadenpaketen 56a, 56b und 58 umschlungen. Die Fadenpakete 56a, 56b und 58 werden mittels der Bundelemente 68 an den Kopplungselementen 64a, 64b gehalten. Die Bundelemente 68 sind im Querschnitt L-förmig ausgebildet und weisen einen an den Kopplungselementen 64a und 64b anliegenden Rohrabschnitt und einen sich in radialer Richtung erstreckenden Abschnitt auf. An dem sich in radialer Richtung erstreckenden Abschnitt der Bundelemente 68 legen sich die Schlingenpakete 56a und 56b an.

Sämtliche der voranstehend beschriebenen Ausführungsformen der fadenverstärkten Gelenkvorrichtungen 46, 52 können in einer Kupplungsvorrichtung 18 gemäß der Figuren 1 bis 6 zum Einsatz kommen. Die einzelnen Aspekte der voranstehend beschriebenen Ausführungsformen von fadenverstärkten Gelenkvorrichtungen 46, 52 können auch in einer einzigen fadenverstärkten Gelenkvorrichtung 46, 52 zusammen vorgesehen sein.

## Patentansprüche

1. Fadenverstärkte Gelenkvorrichtung (46, 52) für eine Kupplungsvorrichtung eines Fahrzeugantriebs, insbesondere eines Niederflurfahrzeugs, umfassend:
- eine Mehrzahl von Kopplungselementen (64, 74),
- mehrere Fadenpaket (56, 58), wobei ein Fadenpaket (56, 58) benachbarte Kopplungselemente (64, 74) kraftübertragend koppelt,
- eine zur axialen Führung wenigstens eines der Fadenpakete (56, 58) an wenigstens einem der Kopplungselemente (64, 74) angeordnete Stützeinrichtung (68);
- wenigstens einen elastischen Körper (60), in den die mehreren Fadenpakete (56, 58) und die Kopplungselemente (64, 74) zumindest teilweise eingebettet sind, **dadurch gekennzeichnet, dass** die Kopplungselemente (64, 74) derart ausgebildet und/oder positionierbar sind, dass die fadenverstärkte Gelenkvorrichtung (46, 52) an verschiedene Befestigungsschnittstellen einer Kupplungsvorrichtung (18, 200, 300) anpassbar ist, wobei wenigstens eine erste Gruppe von Kopplungselementen (64a) auf einem ersten Radius (R1) und eine zweite Gruppe von Kopplungselementen (64b) auf einem zweiten Radius (R2) angeordnet ist, wobei sich der erste Radius (R1) von dem zweiten Radius (R2) unterscheidet, wobei die erste Gruppe von Kopplungselementen (64a) von einer ersten Gruppe der Fadenpakete (56) umschlungen wird, und wobei die zweite Gruppe von Kopplungselementen (64b) von einer zweiten Gruppe der Fadenpakete (58) umschlungen wird.

2. Fadenverstärkte Gelenkvorrichtung (46, 52) nach Anspruch 1,
**dadurch gekennzeichnet, dass** das wenigstens eine Kopplungselement (74) ein Gewinde (80) und einen Abschnitt mit einem vorbestimmten Schraubenkopf (76) aufweist.

3. Fadenverstärkte Gelenkvorrichtung (46, 52) nach Anspruch 1 oder 2,
**dadurch gekennzeichnet, dass** das wenigstens eine Kopplungselement (74) einen als Bundelement wirkenden Abschnitt (78) aufweist.

4. Fadenverstärkte Gelenkvorrichtung (46, 52) nach einem der Ansprüche 1 bis 3,
**dadurch gekennzeichnet, dass** das wenigstens eine Kopplungselement (74) in einer Buchse (92) aufgenommen ist.

5. Fadenverstärkte Gelenkvorrichtung (46, 52) nach einem der Ansprüche 1 bis 4,
**dadurch gekennzeichnet, dass** in Umfangsrichtung der fadenverstärkten Gelenkvorrichtung (46, 52) die Kopplungselemente (64a) der ersten Gruppe und die Kopplungselemente (64b) der zweiten Gruppe wechselweise angeordnet sind.

6. Fadenverstärkte Gelenkvorrichtung (46, 52) nach einem der Ansprüche 1 bis 5,
**dadurch gekennzeichnet, dass** die Kopplungselemente (64a) der ersten Gruppe und die Kopplungselemente (64b) der zweiten Gruppe in radialer Richtung in einer Flucht liegen oder zueinander versetzt angeordnet sind.

7. Fadenverstärkte Gelenkvorrichtung (46, 52) nach einem der Ansprüche 1 bis 6,
**dadurch gekennzeichnet, dass** ein Kopplungselement (64a) der ersten Gruppe und ein Kopplungselement (64b) der zweiten Gruppe über wenigstens ein Fadenpaket (56, 58) miteinander verbunden sind.

8. Fadenverstärkte Gelenkvorrichtung (46, 52) nach einem der Ansprüche 1 bis 7,
**dadurch gekennzeichnet, dass** die Kopplungselemente (64a) der ersten Gruppe über eine erste Gruppe von Fadenpaketen (56, 58) und die Kopplungselemente (64b) der zweiten Gruppe über eine zweite Gruppe von Fadenpaketen (56, 58) miteinander gekoppelt sind.

9. Fadenverstärkte Gelenkvorrichtung (46, 52) nach einem der Ansprüche 1 bis 8,
**dadurch gekennzeichnet, dass** die fadenverstärkte Gelenkvorrichtung (46, 52) mehrere elastische Körper (60) umfasst, die jeweils wenigstens ein Fadenpaket (56, 58) aufweisen.

10. Kupplungsvorrichtung (18) für einen Fahrzeugantrieb, insbesondere für den Antrieb eines Niederflurfahrzeugs, mit
- wenigstens einem ersten Flansch (36), der mit einem Getriebe (16) koppelbar ist,
- wenigstens einem zweiten Flansch (38), der mit dem wenigstens einen ersten Flansch (36) gekoppelt ist,
- wenigstens einem dritten Flansch (50), der mit dem wenigstens einen zweiten Flansch (38) über wenigstens einen Wellenabschnitt (44) verbunden ist, und der mit einem anzutreibenden Rad (12) des Fahrzeugs koppelbar ist,
**dadurch gekennzeichnet, dass** der wenigstens eine Wellenabschnitt (44) sich durch den wenigstens einen ersten Flansch (36) hindurch erstreckt, und wobei der wenigstens eine erste Flansch (36) und der wenigstens eine zweite Flansch (38) über wenigstens eine erste fadenverstärkte Gelenkvorrichtung (46) nach einem der Ansprüche 1 bis 9, gekoppelt sind, und an dem wenigstens
einen dritten Flansch (50) wenigstens eine zweite fadenverstärkte Gelenkvorrichtung (52) nach einem der Ansprüche 1 bis 9,
angeordnet ist, wobei der wenigstens eine Wellenabschnitt (44) eine Verzahnung (42) aufweist, die in eine korrespondierende Verzahnung (40) an dem wenigstens einen zweiten Flansch (38) eingreift.

11. Kupplungsvorrichtung (18) nach Anspruch 10,
**dadurch gekennzeichnet, dass** der wenigstens eine erste Flansch (36) eine Öffnung (48) aufweist, durch die sich der wenigstens eine Wellenabschnitt (44) hindurch erstreckt.

12. Kupplungsvorrichtung (18) nach Anspruch 10 oder 11,
**dadurch gekennzeichnet, dass** die erste und/oder die zweite fadenverstärkte Gelenkvorrichtung eine fadenverstärkte Gelenkvorrichtung nach einem der Ansprüche 1 bis 8 ist.

13. Antriebsanordnung (10) für ein Fahrzeug, insbesondere für ein Niederflurfahrzeug,
mit wenigstens einem Motor (14), der mit wenigstens einem Getriebe (16) gekoppelt, wobei das wenigstens eine Getriebe (16) wenigstens einem anzutreibenden Fahrzeugrad (12) zugeordnet ist, und wobei zwischen dem wenigstens einen Getriebe (16) und dem wenigstens einen Fahrzeugrad (12) wenigstens eine Kupplungsvorrichtung (18) nach einem der Ansprüche 10 bis 12 angeordnet ist.

14. Antriebsanordnung (10) nach Anspruch 13,
**dadurch gekennzeichnet, dass** das wenigstens eine Fahrzeugrad (12) mit der wenigstens einen zweiten Gelenkvorrichtung (52) der Kupplungsvorrichtung (18) gekoppelt ist.

15. Antriebsanordnung (10) nach Anspruch 13 oder 14,
**dadurch gekennzeichnet, dass** der wenigstens eine erste Flansch (36) der Kupplungsvorrichtung (18) wenigstens eine Verzahnung (34) aufweist, die mit wenigstens einer Verzahnung (32) an einem Wellenabschnitt (30) des wenigstens einen Getriebes (16) koppelbar ist.

16. Niederflurfahrzeug mit wenigstens einer Antriebsanordnung nach einem der Ansprüche 13 bis 15.

## Claims

1. Thread-reinforced joint device (46, 52) for a coupling device of a vehicle drive, in particular of a low-floor vehicle, comprising:
- a plurality of coupling elements (64, 74),
- a plurality of thread packages (56, 58), wherein a thread package (56, 58) couples adjacent coupling elements (64, 74) in a force-transmitting manner,
- a support device (68) arranged for axially guiding at least one of the thread packages (56, 58) on at least one of the coupling elements (64, 74);
- at least one elastic body (60) in which the plurality of thread packages (56, 58) and the coupling elements (64, 74) are at least partially embedded, **characterized in that** the coupling elements (64, 74) are formed and/or positionable such that the thread-reinforced joint device (46, 52) is adaptable to different attachment interfaces of a coupling device (18, 200, 300), wherein at least a first group of coupling elements (64a) is arranged on a first radius (R1) and a second group of coupling elements (64b) is arranged on a second radius (R2), wherein the first radius (R1) is different from the second radius (R2), wherein the first group of coupling elements (64a) is looped by a first group of the thread packages (56), and wherein the second group of coupling elements (64b) is looped by a second group of the thread packages (58).

2. Thread reinforced joint device (46, 52) according to claim 1,
**characterized in that** the at least one coupling member (74) includes a thread (80) and a portion having a predetermined screw head (76).

3. Thread-reinforced joint device (46, 52) according to claim 1 or 2,
**characterized in that** the at least one coupling element (74) includes a portion (78) acting as a collar member.

4. The thread-reinforced joint device (46, 52) according to any one of claims 1 to 3,
**characterized in that** the at least one coupling element (74) is received in a bushing (92).

5. Thread-reinforced joint device (46, 52) according to any one of claims 1 to 4, **characterized in that**, in the circumferential direction of the thread-reinforced joint device (46, 52), the coupling elements (64a) of the first group and the coupling elements (64b) of the second group are arranged alternately.

6. Thread-reinforced joint device (46, 52) according to any one of claims 1 to 5, **characterized in that** the coupling elements (64a) of the first group and the coupling elements (64b) of the second group are aligned or offset from each other in the radial direction.

7. Thread-reinforced joint device (46, 52) according to any one of claims 1 to 6, **characterized in that** a coupling element (64a) of the first group and a coupling element (64b) of the second group are connected to each other via at least one thread package (56, 58).

8. Thread-reinforced device (46, 52) according to any one of claims 1 to 7, **characterized in that** the coupling elements (64a) of the first group are coupled together via a first group of thread packages (56, 58) and the coupling elements (64b) of the second group are coupled together via a second group of thread packages (56, 58).

9. Thread-reinforced joint device (46, 52) according to any one of claims 1 to 8, **characterized in that** the filament-reinforced joint device (46, 52) comprises a plurality of elastic bodies (60) each having at least one filament packet (56, 58).

10. Coupling device (18) for a vehicle drive, in particular for the drive of a low-floor vehicle, with
- at least a first flange (36) couplable to a transmission (16),
- at least one second flange (38) coupled to the at least one first flange (36),
- at least one third flange (50) which is connected to the at least one second flange (38) via at least one shaft portion (44) and which is couplable to a wheel (12) of the vehicle to be driven,
**characterized in that** the at least one shaft portion (44) extends through the at least one first flange (36), and wherein the at least one first flange (36) and the at least one second flange (38) are coupled via at least one first thread-reinforced joint device (46) according to any one of claims 1 to 9, and at least one second thread-reinforced joint device (52) according to any one of claims 1 to 9 is arranged on the at least one third flange (50), wherein the at least one shaft portion (44) comprises a toothing (42) engaging a corresponding toothing (40) on the at least one second flange (38).

11. Coupling device (18) according to claim 10,
**characterized in that** the at least one first flange (36) includes an opening (48) through which the at least one shaft portion (44) extends.

12. Coupling device (18) according to claim 10 or 11,
**characterized in that** the first and/or the second thread-reinforced joint device is a thread-reinforced joint device according to any one of claims 1 to 8.

13. Drive arrangement (10) for a vehicle, in particular for a low-floor vehicle,
with at least one motor (14) coupled to at least one transmission (16), wherein the at least one transmission (16) is associated with at least one vehicle wheel (12) to be driven, and wherein at least one coupling device (18) according to one of claims 10 to 12 is arranged between the at least one transmission (16) and the at least one vehicle wheel (12).

14. Drive arrangement (10) according to claim 13,
**characterized in that** the at least one vehicle wheel (12) is coupled to the at least one second joint device (52) of the coupling device (18).

15. Drive arrangement (10) according to claim 13 or 14,
**characterized in that** the at least one first flange (36) of the coupling device (18) has at least one set of teeth (34) that can be coupled to at least one set of teeth (32) on a shaft portion (30) of the at least one transmission (16).

16. Low-floor vehicle having at least one drive arrangement according to any one of claims 13 to 15.

## Revendications

1. Dispositif d'articulation à armature métallique (46, 52) pour un dispositif d'accouplement d'un mécanisme d'entraînement de véhicule, notamment de véhicule à plate-forme surbaissée, comprenant :
- une pluralité d'éléments d'accouplement (64, 74),
- plusieurs paquets de brins métalliques (56, 58), un paquet de brins métalliques (56, 58) couplant en transmission de force des éléments d'accouplement (64, 74) voisins,
- un système d'appui (68) disposé sur au moins un des éléments d'accouplement (64, 74) et destiné au guidage axial d'au moins un des paquets de brins métalliques (56, 58);
- au moins un corps élastique (60) dans lequel sont incorporés au moins partiellement lesdits plusieurs paquets de brins métalliques (56, 58) et les éléments d'accouplement (64, 74),
**caractérisé en ce que** les éléments d'accouplement (64, 74) sont conçus et/ou positionnables de telle sorte que le dispositif d'articulation à armature métallique (46, 52) peut être adapté à différentes interfaces de fixation d'un dispositif d'accouplement (18, 200, 300), au moins un premier groupe d'éléments d'accouplement (64a) étant disposé sur un premier rayon (R1) et un second groupe d'éléments d'accouplement (64b) sur un second rayon (R2), le premier rayon (R1) se distinguant du second rayon (R2), le premier groupe d'éléments d'accouplement (64a) étant enserré par un premier groupe de paquets de brins métalliques (56), et le second groupe d'éléments d'accouplement (64b), par un second groupe de paquets de brins métalliques (58).

2. Dispositif d'articulation à armature métallique (46, 52) selon la revendication 1, **caractérisé en ce que** ledit au moins un élément d'accouplement (74) présente un filetage (80) et un segment avec une tête de vis (76) prédéterminée.

3. Dispositif d'articulation à armature métallique (46, 52) selon la revendication 1 ou 2,
**caractérisé en ce que** ledit au moins un élément d'accouplement (74) présente un segment (78) se comportant comme un élément de collier.

4. Dispositif d'articulation à armature métallique (46, 52) selon l'une des revendications 1 à 3,
**caractérisé en ce que** ledit au moins un élément d'accouplement (74) est logé dans une douille (92).

5. Dispositif d'articulation à armature métallique (46, 52) selon l'une des revendications 1 à 4,
**caractérisé en ce que** les éléments d'accouplement (64a) du premier groupe et les éléments d'accouplement (64b) du second groupe sont disposés en alternance dans la direction circonférentielle du dispositif d'articulation à armature métallique (46, 52).

6. Dispositif d'articulation à armature métallique (46, 52) selon l'une des revendications 1 à 5,
**caractérisé en ce que** les éléments d'accouplement (64a) du premier groupe et les éléments d'accouplement (64b) du second groupe sont disposés alignés ou décalés les uns par rapport aux autres dans le sens radial.

7. Dispositif d'articulation à armature métallique (46, 52) selon l'une des revendications 1 à 6,
**caractérisé en ce qu'**un élément d'accouplement (64a) du premier groupe et un élément d'accouplement (64b) du second groupe sont couplés l'un à l'autre par le biais d'au moins un paquet de brins métalliques (56, 58).

8. Dispositif d'articulation à armature métallique (46, 52) selon l'une des revendications 1 à 7,
**caractérisé en ce que** les éléments d'accouplement (64a) du premier groupe sont couplés les uns aux autres par le biais d'un premier groupe de paquets de brins métalliques (56, 58), et les éléments d'accouplement (64b) du second groupe, par le biais d'un second groupe de paquets de brins métalliques (56, 58).

9. Dispositif d'articulation à armature métallique (46, 52) selon l'une des revendications 1 à 8,
**caractérisé en ce que** le dispositif d'articulation à armature métallique (46, 52) comporte plusieurs corps élastiques (60) qui présentent chacun au moins un paquet de brins métalliques (56, 58).

10. Dispositif d'accouplement (18) pour un mécanisme d'entraînement de véhicule, notamment pour l'entraînement d'un véhicule à plate-forme surbaissée, comprenant :
- au moins une première flasque (36) qui peut être couplée à une transmission (16),
- au moins une deuxième flasque (38) qui est couplée à ladite au moins une première flasque (36),
- au moins une troisième flasque (50) qui est couplée à ladite au moins une deuxième flasque (38) par le biais d'au moins un segment d'arbre (44) et qui peut être couplée à une roue (12) à entraîner du véhicule,
**caractérisé en ce que** ledit au moins un segment d'arbre (44) s'étend à travers ladite au moins une première flasque (36) et **en ce que** ladite au moins une première flasque (36) et ladite au moins une deuxième flasque (38) sont couplées par le biais d'au moins un dispositif d'articulation à armature métallique (46) selon l'une des revendications 1 à 9, et **en ce qu'**au moins un second dispositif d'articulation à armature métallique (52) selon l'une des revendications 1 à 9 est disposé sur ladite au moins une troisième flasque (50), ledit au moins un segment d'arbre (44) présentant une denture (42) qui s'engrène dans une denture correspondante (40) sur ladite au moins une deuxième flasque (38).

11. Dispositif d'accouplement (18) selon la revendication 10,
**caractérisé en ce que** ladite au moins une première flasque (36) présente une ouverture (48) à travers laquelle s'étend ledit au moins un segment d'arbre (44).

12. Dispositif d'accouplement (18) selon la revendication 10 ou 11,
**caractérisé en ce que** le premier et/ou le second dispositif d'articulation à armature métallique consiste en un dispositif d'articulation à armature métallique selon l'une des revendications 1 à 8.

13. Système d'entraînement (10) pour un véhicule, notamment pour un véhicule à plate-forme surbaissée,
comprenant au moins un moteur (14) qui est couplé à au moins une transmission (16), ladite au moins une transmission (16) étant associée à au moins une roue de véhicule (12) à entraîner, et au moins un dispositif d'accouplement (18) selon l'une des revendications 10 à 12 étant disposé entre ladite au moins une transmission (16) et ladite au moins une roue de véhicule (12).

14. Système d'entraînement (10) selon la revendication 13,
**caractérisé en ce que** ladite au moins une roue de véhicule (12) étant couplée audit au moins un second dispositif d'articulation (52) du dispositif d'accouplement (18).

15. Système d'entraînement (10) selon la revendication 13 ou 14,
**caractérisé en ce que** ladite au moins une première flasque (36) du dispositif d'accouplement (18) présente au moins une denture (34) qui peut être couplée à au moins une denture (32) sur un segment d'arbre (30) de ladite au moins une transmission (16).

16. Véhicule à plate-forme surbaissée pourvu d'au moins un système d'entraînement selon l'une des revendications 13 à 15.
